(19) Europäisches Patentamt
European Patent Office
Office européen des brevets

(11) EP 2 402 469 A1

# (12) EUROPEAN PATENT APPLICATION
published in accordance with Art. 153(4) EPC

(43) Date of publication:
**04.01.2012 Bulletin 2012/01**

(21) Application number: **10746053.7**

(22) Date of filing: **29.01.2010**

(51) Int Cl.:
***C22C 38/00*** (2006.01) ***C21D 8/00*** (2006.01)
***C22C 38/14*** (2006.01) ***H01M 8/02*** (2006.01)

(86) International application number:
**PCT/JP2010/051245**

(87) International publication number:
**WO 2010/098172 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.02.2009 JP 2009043183**

(71) Applicant: **National Institute of Advanced Industrial Science and Technology**
**Tokyo 100-8921 (JP)**

(72) Inventors:
- **MATSUOKA, Saburo**
  **Fukuoka-shi**
  **Fukuoka 819-0395 (JP)**
- **HAYAKAWA, Masao**
  **Tsukuba-shi**
  **Ibaraki 305-0047 (JP)**
- **TAKEUCHI, Etsuo**
  **Tsukuba-shi**
  **Ibaraki 305-0047 (JP)**
- **NAGASHIMA, Nobuo**
  **Tsukuba-shi**
  **Ibaraki 305-0047 (JP)**

(74) Representative: **TER MEER - STEINMEISTER & PARTNER GbR**
**Artur-Ladebeck-Strasse 51**
**33617 Bielefeld (DE)**

## (54) HYDROGEN FATIGUE RESISTANT FERRITE STEEL AND MANUFACTURING METHOD THEREOF

(57) A ferritic steel having tensile properties and fatigue properties capable of withstanding use in a hydrogen environment and a method of manufacture thereof are provided. By adding one or more element selected from among vanadium (V), titanium (Ti) and niobium (Nb) so that the steel includes, together with at least ferrite grains in the structure, a carbide or carbides of one or more element selected from among V, Ti and Nb, the reduction of area and the fatigue crack propagation rate of the ferritic steel in a hydrogen environment are improved. The advantages of the invention were confirmed in cases where the ferrite grains are small grains of 1 μm or less in size, and in cases where the ferrite grains are coarse grains from several micrometers to 20 μm in size, and moreover in cases where the ferrite grains are coarse grains from several micrometers to 60 μm in size.

FIG. 14

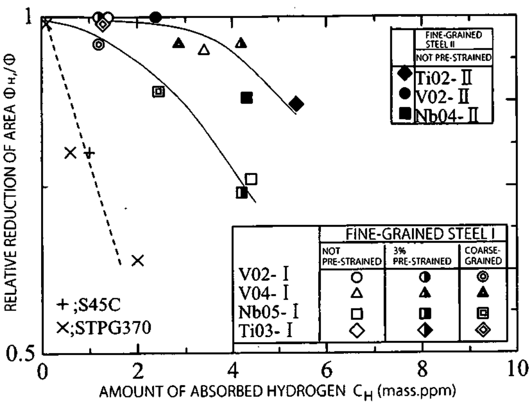




Printed by Jouve, 75001 PARIS (FR)

**Description**

TECHNICAL FIELD

The present invention relates to metal materials used in a hydrogen environment. More particularly, the invention relates to ferritic steels having excellent tensile properties and fatigue properties in a hydrogen environment, and to a method of manufacture thereof.

BACKGROUND ART

From a global environmental standpoint, large expectations are being placed on having hydrogen energy systems such as fuel cell vehicles and a hydrogen energy infrastructure of hydrogen stations and the like become a reality. However, metal materials exposed to hydrogen in a hydrogen atmosphere undergo declines in tensile properties and fatigue properties due to hydrogen embrittlement. In particular, given that fatigue failure is associated with 80% of failure accidents, there is a need to elucidate the mechanisms for the hydrogen-induced decline in fatigue properties and to pay very close attention to the fatigue design of hydrogen-related equipment. In light of the above, to ensure the safety and reliability of hydrogen energy systems and infrastructure, there exists a desire for high-performance metal materials which do not experience hydrogen-induced declines in tensile properties and fatigue properties.

For example, at present, only the austenitic stainless steel SUS316L and the aluminum alloy 6061-T6 have been approved for use as metal materials exposed to hydrogen in fuel cell vehicles, with 6061-T6 being used as the liner of hydrogen tank and SUS316L being used in pipes and various types of valves and springs. Titanium alloys are used in the hydrogen storage vessels disclosed in Patent Documents 1 and 2. Moreover, austenitic stainless steel is almost always assumed as the piping material to be used in the hydrogen pipelines currently being proposed.

Patent Document 1: Japanese Patent Application Laid-open No. H10-38486
Patent Document 2: Japanese Patent Application Laid-open No. 2007-298131

Today, the metal materials regarded as capable of withstanding use in a hydrogen environment, including the above-mentioned austenitic stainless steel, are all very expensive. Were these to be used in the construction of a hydrogen infrastructure, the costs calculated based on the amount of such materials that would be needed in piping would be extremely high. This has become an obstacle to the construction of a hydrogen infrastructure. In addition, parts used in a hydrogen environment end up being expensive, which is a major factor holding back the popularization of fuel cell vehicles and the like. By contrast, ferritic steels cost no more than one-tenth as much as austenitic steel. However, when used in a hydrogen environment, their tensile properties and fatigue properties are far inferior to those of austenitic steels, making their use under conditions of exposure to hydrogen difficult at present.

DISCROSURE OF THE INVENTION

This invention was conceived in light of the above circumstances. The object of the invention is to provide ferritic steels having tensile properties and fatigue properties capable of withstanding use in a hydrogen environment, and a method of manufacturing the same.

The invention solves the above problems by the following means.

By adding one or more element selected from among vanadium (V), titanium (Ti) and niobium (Nb) so as to include, together with at least ferrite grains in the structure, a carbide or carbides of one or more element selected from among V, Ti and Nb, the reduction of area and fatigue crack propagation rate of ferritic steel in a hydrogen atmosphere are improved. The advantages of the invention were confirmed in cases where the ferrite grains are small grains 1 $\mu$m or less in size, in cases where the ferrite grains are coarse grains from several micrometers to 20 $\mu$m in size, and in cases where the ferrite grains are coarse grains from several micrometers to 60 $\mu$m in size.

The one or more element selected from among V, Ti and Nb is added in an amount which is preferably at least the amount required to fix all carbon (C) in the structure as the carbide or carbides thereof. That is, an amount sufficient to fix all the carbon in the structure as vanadium carbide, titanium carbide, niobium carbide, or two or more of these carbides. The amount C* of carbon which can be fixed as the carbides VC, TiC and NbC having stoichiometric compositions may be obtained from the following formula, wherein $V^C$, $Ti^C$ and $Nb^C$ represent the amounts of the respective elements which bond with carbon.

$$C^* = (12.01/50.94)V^C + (12.01/47.86)Ti^C + (12.01/92.90)Nb^C$$
$$= (1/4.24)V^C + (1/3.99)Ti^C + (1/7.74)Nb^C \quad (1)$$

Here, the units of $C^*$, $V^C$, $Ti^C$ and $Nb^C$ are mass %. The atomic weights of C, V, Ti and Nb were taken to be, respectively, 12.01, 50.94, 47.86 and 92.90.
In order to fix all the carbon included in the structure, the following must hold

$$C < C^* \quad (2)$$

(the units of C here are mass %).
Therefore, the amounts of addition for the respective elements are

$$V = V^C,\ Ti = Ti^C,\ Nb = Nb^C \quad (3).$$

Here, the amounts of V, Ti and Nb are in units of mass %.

In cases where vanadium has been added, a similar improvement in the reduction of area performance can be confirmed even without reaching the amount required to fix all the carbon (FIG. 14). The experimental examples shown below are examples in which only one element selected from among V, Ti and Nb has been added. However, it is of course acceptable for two selected from among these elements, or for all three, to be added.

The invention has the effect of improving the tensile properties and fatigue properties of ferritic steels in a hydrogen environment, and enabling them to withstand use under circumstances involving exposure to hydrogen. This makes it possible to markedly reduce the expenses required for building a hydrogen infrastructure. Moreover, the invention also makes it possible to greatly reduce production costs for parts used in a hydrogen environment, such as hydrogen tank liners, pipelines and various types of valves and springs used in fuel cell vehicles, thus making it possible to provide fuel cell vehicles at lower prices. In addition, the invention makes it possible to hold down considerably construction costs for hydrogen pipelines.

At present, SUS316L is used as the material in the pipelines through which high-pressure hydrogen gas flows at hydrogen stations for 701 Mpa. SUS316L lines manufactured in accordance with the High-Pressure Gas Safety Act have the following dimensions: in 1/2 inch pipe, an outside diameter of 12.7 mm and an inside diameter of 3.1 mm; in 3/8 inch pipe, an outside diameter of 10 mm and an inside diameter of 2.1 mm. In addition, hydrogen gas filling nozzles have an inside diameter of 1.6 mm. Because of such a small inside diameter, pressure loss sometimes occurs, causing the flow rate during filling to become only a fraction of the initial design value. It is possible to improve the fill rate to some degree by using SUS316, but at a very high cost. By using the ferritic steel of the invention as the pipe material, it is possible to construct a hydrogen station at a much lower cost than at present.

In recent years, SGP and STPG370 carbon steel pipes have been investigated as candidate materials for hydrogen pipelines. However, from the standpoint of properties, the toughness decreases due to the presence of pearlite in the carbon steel. Moreover, a problem with pearlite is that it becomes a hydrogen trapping site. Therefore, pearlite-free ferritic steel, owing to the improved tensile properties and fatigue properties in a hydrogen environment, is outstanding as a candidate material for hydrogen pipelines.

## BRIEF DESCRIPTION OF THE DIAGRAMS

FIG. 1 shows photographs of the structure of S45C, FIG. 1(a) being a transverse section, and FIG. 1(b) being a longitudinal section.
FIG. 2 is a photograph of the structure of the fine-grained material Ti02-II (with 0.25 mass % Ti addition).
FIG. 3 is a photograph of the structure of the fine-grained material V02-II (with 0.27 mass % Ti addition).
FIG. 4 is a photograph of the structure of the coarse-grained material V02-I (with 0.2 mass % V addition) which was annealed at 600°C for 1 hour.

FIG. 5 is a photograph of the structure of the coarse-grained material V04-I (with 0.4 mass % V addition) which was annealed at 600°C for 1 hour.

FIG. 6 is a photograph of the structure of the coarse-grained material of Nb05-I (with 0.53 mass % Nb addition) which was annealed at 600°C for 1 hour.

FIG. 7 is a photograph of the structure of the coarse-grained material Ti03-I (with additions of 0.3 mass % Ti and 50 mass ppm boron (B)) which was annealed at 600°C for 1 hour.

FIG. 8 shows photographs of the structure of the coarse-grained material V02-II (with 0.27 mass % V addition) which was annealed at 700°C for 1 hour, FIG. 8(a) being a transverse section and FIG. 8(b) being a longitudinal image.

FIG. 9 illustrates the relationship between the amount of absorbed hydrogen content and immersion time in a test specimen in the form of a round bar of 8 mm diameter, FIG. 9(a) showing the relationship when the specimen is made of S45C, and FIG. 9(b) showing the relationship when the specimen is made of the comparison base steel (fine-grained material) or Ti02-II (fine-grained material).

FIG. 10 shows test pieces used in fatigue life tests, FIG. 10(a) being a smooth specimen, and FIG. 10(b) being a notched specimen.

FIG. 11 illustrates methods for reducing the stress intensity factor range $\Delta K$ in a fatigue crack propagation test, FIG. 11(a) being a method for holding the stress ratio R constant and decreasing both the maximum load (Pmax) and the minimum load (Pmin), and FIG. 11(b) being a method for holding the maximum load (Pmax) constant and increasing the minimum load (Pmin) as the crack propagates.

FIG. 12 shows test pieces used in fatigue crack propagation tests, FIG. 12(a) being a compact tension (CT) test piece, and FIG. 12(b) being a plate-type bending specimen.

FIG. 13 is a fatigue crack propagation test apparatus which uses a plate-type bending specimen.

FIG. 14 is a graph showing the relationship between the relative reduction of area $\phi H/\phi$ and the amount of absorbed hydrogen.

FIG. 15 is a graph showing the fatigue life properties of an S45C smooth specimen.

FIG. 16 is a graph showing the fatigue life properties of an S45C notched specimen.

FIG. 17 is a graph showing the fatigue life properties of the comparison base steel (fine-grained material).

FIG. 18 is a graph showing the fatigue life properties of Ti02-II (fine-grained material).

FIG. 19 is a graph showing the fatigue life properties of V02-II (fine-grained material).

FIG. 20 is a graph showing the fatigue life properties of Nb04-II (fine-grained material).

FIG. 21 is a graph showing the fatigue life properties of V005 (fine-grained material).

FIG. 22 is a graph showing the fatigue life properties of V007-Nb01-Ti007 (fine-grained material).

FIG. 23 is a graph showing the fatigue crack propagation properties of S45C when the stress ratio R was set to 0.1.

FIG. 24 is a graph showing the fatigue crack propagation properties of S45C when the stress ratio R was set to 0.5.

FIG. 25 is a graph showing the fatigue crack propagation properties of S45C when the stress ratio R was varied.

FIG. 26 is a graph showing the fatigue crack propagation properties at the various stress ratios in FIGS. 23 to 25.

FIG. 27 is a graph showing the fatigue crack propagation properties of V02-I (fine-grained material).

FIG. 28 is a graph showing the fatigue crack propagation properties of V02-II (coarse-grained material: annealed at 700°C for 1 hour).

FIG. 29 is a graph showing the fatigue crack propagation properties of V005 (fine-grained material).

FIG. 30 is a graph showing the fatigue crack propagation properties of V007-Nb01-Ti007 (fine-grained material).

FIG. 31 is a graph showing the relationship between the fatigue relative crack propagation rate and the cycle speed for hydrogen-charged material and uncharged material at R = 0.5 and $\Delta K$ = 10 $MPa\cdot m^{1/2}$.

FIG. 32 is a graph showing the relationship between the relative fatigue life and the cycle speed for uncharged material and hydrogen-charged material at $\sigma a$ = 350 MPa.

BEST MODE FOR CARRYING OUT THE INVENTION

In the invention, it was discovered that when ferritic steel to which a trace amount of at least one element selected from among vanadium (V), titanium (Ti) and niobium (Nb) has been added is hydrogen-charged then subjected to tensile testing and fatigue testing, considerable improvements with regard to the effects of hydrogen on the tensile properties and the fatigue properties are achieved compared with conventional materials. Preferred modes for carrying out the invention are described below in detail.

1. Test Materials

The chemical ingredients in the test materials are shown in Tables 1 to 4. The balance in all of the materials was iron (Fe) and inadvertent impurities. Table 1 shows the chemical ingredients in the common carbon steel S45C for machine structural use which is used here for the sake of comparison.

Table 1

| Chemical ingredients (mass %) in carbon steel S45C for machine structural use | | | | | | | | |
|---|---|---|---|---|---|---|---|---|
| S45C | C | Si | Mn | P | S | Cu | Ni | Cr |
| | 0.47 | 0.18 | 0.63 | 0.014 | 0.003 | 0.11 | 0.1 | 0.08 |

Table 2 shows the chemical ingredients in the comparison base steel.

Table 2

| Chemical ingredients (mass %) in comparison base steel | | | | | | |
|---|---|---|---|---|---|---|
| O-I | C | Si | Mn | Cu | Al | O |
| | 0.022 | 0.28 | 1.28 | 0.001 | 0.0009 | 0.002 |

As shown in Table 3 (Series I) and Table 4 (Series II), the materials of the invention are ferritic steels in which the base steel is 0.05C-0.30Si-1.5Mn and to which a trace amount of at least one element selected from among V, Ti and Nb has been added. Chemical analysis of all the materials was carried out by inductively coupled plasma emission spectroscopy. Here, the amounts of V, Ti and Nb addition are determined based on above formulas (1) to (3). When the carbon content is 0.05 mass %, the amounts of these respective elements needed to fix the carbon are 0.212 mass % of V, 0.199 mass % of Ti, and 0.387 mass % of Nb. These values indicate the amount required to fix all the carbon when V, Ti or Nb is added alone. As shown in Table 3, the amount of V addition in V02-I is 0.2 mass %, the amount of V addition in V04-I is 0.4 mass %, the amount of Ti addition in Ti03-I is 0.3 mass %, and the amount of Nb addition in Nb05-I is 0.53 mass %. In V04-I, Ti03-I and Nb05-I, the amount of these respective elements suffices as the amount required to fix all the carbon. However, in V02-I, the amount of vanadium is lower than the amount required to fix all the carbon. As shown in Table 4, the amount of Ti addition in T102-II is 0.25 mass %, the amount of V addition in V02-II is 0.27 mass %, and the amount of Nb addition in Nb04-II is 0.45 mass %. In each of these materials, the amount of these elements suffices as the amount required to fix all the carbon. Thus, in the Series I materials V02-I and V04-I shown in Table 3, the V additions are respectively 0.2 mass % and 0.4 mass %; and in the Series II material V02-II shown in Table 4, the V addition is 0.27 mass %. Hence, materials were prepared which contained amounts of these elements that ranged from less than to about twice as much as the amount required to fix all the carbon; that is, an addition of 0.212 mass %, as determined based on formulas (1) to (3).

Table 3

| Chemical ingredients (mass %) in Series I | | | | | | | |
|---|---|---|---|---|---|---|---|
| | C | Si | Mn | Ti | V | Nb | B (ppm) |
| V02-I | 0.05 | 0.30 | 1.5 | | 0.2 | | |
| V04-I | 0.05 | 0.30 | 1.5 | | 0.4 | | |
| Nb05-I | 0.05 | 0.30 | 1.5 | | | 0.53 | |
| Ti03-I | 0.05 | 0.30 | 1.5 | 0.3 | | | 50 |

Table 4

| Chemical ingredients (mass %) in Series II | | | | | | | | | | |
|---|---|---|---|---|---|---|---|---|---|---|
| | C | Si | Mn | P | S | Ti | V | Nb | Al | O |
| Ti02 -II | 0.05 | 0.30 | 1.51 | 0.001 | 0.001 | 0.2 5 | | | 0.006 | 0.002 |

(continued)

| Chemical ingredients (mass %) in Series II | | | | | | | | | | |
|---|---|---|---|---|---|---|---|---|---|---|
| | C | Si | Mn | P | S | Ti | V | Nb | Al | O |
| V02- II | 0.05 | 0.31 | 1.51 | 0.002 | 0.001 | | 0.2 7 | | 0.005 | 0.003 |
| Nb04 -II | 0.05 | 0.31 | 1.52 | 0.001 | 0.002 | | | 0.45 | 0.010 | 0.003 |

Table 5 shows the heat treatment conditions and the thermomechanical treatment conditions for the test materials. As shown in Table 5(a), S45C used in the experiments below was obtained by annealing (heated at 845°C for 30 minutes, then allowed to cool in air), followed by quenching (so-called water quenching, which entails heating at 845°C for 30 minutes followed by cooling in water), then tempering (heated at 550°C for 60 minutes, then allowed to cool in air).

Table 5

| (a) Heat treatment conditions for S45C | | |
|---|---|---|
| Annealing | Quenching | Tempering |
| 30 minutes at 845°C, cooled in air | 30 minutes at 845°C, cooled in water | 60 minutes at 550°C, cooled in air |
| (b) Thermomechanical treatment conditions for fine-grained material | | |
| Forging | Rolling | |
| 60 minutes at 1170°C, cooled in air | 560°C, 95% rolling reduction, cooled in water | |
| (c) Thermomechanical treatment conditions for coarse-grained material | | |
| Forging | Rolling | Annealing |
| 60 minutes at 1170°C, cooled in air | 560°C, 95% rolling reduction, cooled in water | 60 minutes at 600°C or 60 minutes at 700°C, cooled in air |

In addition, base material as a control and various Series I and Series II ferritic steels subjected to the thermomechanical treatment shown in Table 5(b) were also prepared. That is, treatment entailed 60 minutes of forging at 1170°C, followed in turn by cooling in air, rolling at 560°C and a rolling reduction of 95%, and cooling in water to form a fine-grained structure. Ferritic steels subjected to this treatment are referred to herein as "fine-grained materials." In addition to fine-grained materials, various Series I and Series II ferritic steels subjected to the thermomechanical treatment shown in Table 5(c) were prepared. This treatment entailed carrying out the thermomechanical treatment in Table 5(b) and additionally carrying out 60 minutes of annealing at 600°C or 700°C so as to obtain a grain size which is about the same as that in conventional materials. Ferritic steels subjected to this treatment are referred to herein as "coarse-grained materials."

The inventors also prepared two test materials having reduced additions of V, Ti and Nb. The chemical ingredients of those test materials are shown in Table 6. In both materials, the balance was iron (Fe) and inadvertent impurities. In the material V005 shown in Table 6, 0.05 mass % of V has been added. This is substantially the amount required to fix all carbon (C). In the material V007-Nb01-Ti007, 0.07 mass % of V, 0.13 mass % of Nb and 0.07 mass % of Ti have been added. That is, V has been added in about one-third the amount required to fix all the carbon with V alone, Nb has been added in about one-third the amount required to fix all the carbon with Nb alone, and Ti has been added in about one-third the amount required to fix all the carbon with Ti alone. Collectively, these amounts of addition are approximately the same as the amount required to fix all the carbon. Fine-grained materials obtained by subjecting V005 and V007-Nb01-Ti007 to the thermomechanical treatment in Table 5(b) were prepared.

Table 6

| Chemical ingredients (mass %) in fine-grained material having reduced additions | | | | | | |
|---|---|---|---|---|---|---|
| | C | Si | Mn | Ti | V | Nb |
| V005 | 0.05 | 0.30 | 1.5 | | 0.05 | |

(continued)

| Chemical ingredients (mass %) in fine-grained material having reduced additions | | | | | | |
|---|---|---|---|---|---|---|
| | C | Si | Mn | Ti | V | Nb |
| V007-Nb01-Ti007 | 0.05 | 0.30 | 1.5 | 0.07 | 0.07 | 0.13 |

FIGS. 1 to 4 show photographs of the microstructures. FIG. 1 shows optical micrographs of S45C subjected to the heat treatment shown in Table 5(a); the structure is tempered martensite. FIG. 1(a) is a transverse section, and FIG. 1(b) is a longitudinal section. FIGS. 2 and 3 are photographs of the structure of fine-grained materials, and were obtained by preparation of a thin-film of the material and observation with a transmission electron microscope (Hitachi, Ltd.). FIG. 2 is a photograph of the structure of the fine-grained material Ti02-II (with 0.25 mass % of Ti addition) shown in Table 4, and FIG. 3 is similarly a photograph of the structure of the fine-grained material V02-II (with 0.27 mass % of V addition) shown in Table 4. It was possible to confirm from these photographs that the structure as a whole is a fine ferrite grain structure, and that the ferrite grains of which the structure is primarily composed are fine grains having a size of 1 μm or less.

FIGS. 4 to 7 are photographs of the structure of coarse-grained materials obtained with one hour of annealing at 600°C, and FIG. 8 shows photographs of the structure of a coarse-grained material obtained with one hour of annealing at 700°C. Both were examined under an optical microscope after being corroded with an ordinary Nital solution (3 vol % nitric acid + ethanol). FIGS. 4, 5, 6 and 7 are respectively photographs of the structures of the materials V02-I (with 0.2 mass % V addition), V04-I (with 0.4 mass % V addition), Nb05-I (with 0.53 mass % Nb addition) and Ti03-I (with 0.3 mass % Ti and 50 mass ppm boron (B) additions) shown in Table 3. From the photographs in FIGS. 4 to 7, it was possible to confirm that the structure overall was a relatively coarse ferrite grain structure, and that the ferrite grains of which the structure is primarily composed are coarse grains having a size of from several micrometers to 20 μm. FIG. 8 shows photographs of the structure of the material V02-II (with 0.27 mass % V addition) shown in Table 4, FIG. 8(a) being a transverse section, and FIG. 8(b) being a longitudinal section. It was possible to confirm from the photographs in FIG. 8 that the structure as a whole was a coarse ferrite grain structure, and that the ferrite grains of which the structure is primarily composed are coarse grains having a size of from several micrometers to 60 μm.

2. Hydrogen Charging Method

An immersion charging method was used to hydrogen charge the specimens. The hydrogen charging conditions used were in general accordance with the proposed measures being studied for standardization by the Iron and Steel Institute of Japan and the Japan Society of Spring Engineers. That is, hydrogen charging was carried out by immersion in an aqueous solution containing 20 mass % of ammonium thiocyanate. The temperature of the aqueous solution was held at 40°C, and the charging time was 48 hours. FIG. 9 shows an example of the relationship between the amount of absorbed hydrogen and the immersion time in round bars of 8 mm diameter as the specimens. FIG. 9(a) shows the relationship when the specimen is made of S45C, and FIG. 9(b) shows the relationship when the specimen is made of a fine-grained comparison base steel or of the fine-grained material Ti02-II. Because the amount of absorbed hydrogen in FIG. 9 reaches saturation in about 15 hours, the charging time in this invention was set to 48 hours.

3. Tensile Test Method

The tensile test was carried out using an autoclave having a maximum capacity of 100 kN (Shimadzu Corporation) and based on JIS B7721. The test rate was 0.5 mm/min. The specimens were No. JIS 14A bars having a diameter of 5 mm and a gauge length L of 25 mm.

4. Fatigue Test Methods

4-1. Fatigue Life Test

The fatigue life test was carried out using a hydraulic servo-type tension-compression fatigue tester (Shimadzu Corporation) having a maximum capacity of 50 kN, and under sinusoidal uniaxial loading. The stress ratio R (minimum stress/maximum stress: $\sigma min/\sigma max$) was -1. The test was carried out only at a cycle speed of 30 Hz on the uncharged material, and at three cycle speeds-0.2 Hz, 2 Hz and 30 Hz-on hydrogen-charged materials. However, in the case of S45C and the fine-grained comparison base steel, because the fatigue life had a strong cycle speed dependence, tests at 0.02 Hz were also carried out. The fatigue tests carried out were primarily low life-side (high stress-side) tests in which hydrogen release from the specimen was low. The specimens used in the fatigue life tests are shown in FIG. 10. These are specimens with shapes that are commonly used in fatigue life tests. Use was made of both the smooth specimen shown in FIG. 10(a) and the notched specimen shown in FIG. 10(b). The smooth specimen was a round bar having parallel sections with a diameter of 8 mm. In the notched specimen, an annular V-shaped notch with a depth of 1.5 mm was introduced at the center of a smooth specimen. The stress intensity factor Kt was 3.7. Finishing treatment at the surface in the test region of the specimen consisted of axial polishing with No. 600 sandpaper (JIS R6252).

4-2. Fatigue Crack Propagation Test

To further clarify the effects of hydrogen on the fatigue properties, a fatigue crack propagation test was performed on some of the materials. The fatigue crack propagation test was carried out using a hydraulic servo-type tension compression fatigue test having a maximum capacity of 10 kN, and under sinusoidal loading at a cycle speed of 30 Hz. The two methods shown in FIG. 11 were used as the methods for reducing the stress intensity factor range $\Delta K$. One was a method in which, as shown in FIG. 11(a), both the maximum load (Pmax) and the minimum load (Pmin) are reduced while keeping the stress ratio R constant ($\Delta K$ reducing test at constant R = 0.1, or $\Delta K$ reducing test at constant R = 0.5). This method is commonly used. The other is a method in which, as shown in FIG. 11(b), the maximum load (Pmax) is kept constant and the minimum load (Pmin) is raised as cracking proceeds ($\Delta K$ reducing test at constant PMax). The $\Delta K$ reduction ratio was set at $d\Delta K/da = -2$ Gpa.m$^{1/2}$ in both tests.

In the $\Delta K$ reducing tests at constant Pmax, when $\Delta K$ decreases as the crack progresses, the stress ratio R gradually rises. Hence, by setting the initial test conditions to $R \geq 0.5$ and $\Delta K \geq 7$ MPa·m$^{1/2}$, complex crack closing behavior can be avoided until the fatigue crack threshold $\Delta K_{th}$ is reached. In this way, the influence of hydrogen on fatigue crack propagation can be clearly understood. To clarify the cycle speed dependency, 0.2 Hz and 2 Hz tests were also carried out on Series I and Series II materials having trace element additions. In these cases, the tests were carried out near $\Delta K = 10$ MPa·m$^{1/2}$ and at R = 0.5 and a constant load amplitude $\Delta P$. The crack lengths were measured at intervals of 0.2 mm or 0.1 mm using both the alternating current potential method and the compliance method (a method of measuring the crack length from the output of a strain gauge attached to the back of the specimen). A 1 mm pre-crack was introduced at R = 0.1 and $\Delta K = 15$ MPa·m$^{1/2}$.

The specimen had a shape commonly used in fatigue crack propagation tests. Because the Series I and Series II stock was in the form of 17 mm square bar, the plate-like bending specimens having a width of 12 mm and a plate thickness of 10 mm shown in FIG. 12(b) were used. In cases where plate-like bending specimens were used, crack propagation tests were carried out using the test apparatus shown in FIG. 13. On the other hand, because the S45C stock was large, the compact tension (CT) specimens having a plate width of 35 mm and a plate thickness of 6 mm shown in FIG. 12(a) were used. In this case, the load was applied by pin connection. Some plate-type bending specimen tests were also carried out on S45C, from which there was confirmed to be no difference with the results obtained using CT specimens.

4-3. Hydrogen Analysis Method

Following completion of the fatigue tests, samples were immediately cut from the test specimens, and the amount of absorbed hydrogen was measured with a gas chromatograph-type thermal differential analyzer (TDA). The ramp-up rate was set at 100°C/h up to an ultimate temperature of 600°C, and the cumulative amount of hydrogen released up to 500°C was treated as the amount of absorbed hydrogen.

5. Test Results

5-1. Tensile Properties

Table 7(a) shows the tensile test results for the S45C uncharged material, and Table 7(b) shows the tensile test results for the S45C hydrogen-charged material. Table 8(a) shows the test results for Series I (fine-grained) uncharged materials, Table 8(b) shows the test results for Series I (fine-grained) hydrogen-charged materials, and Table 8(c) shows the test results for Series I (fine-grained) hydrogen-charged materials which were 3% pre-strained. Table 9(a) shows the test results for Series II (fine-grained) uncharged materials, and Table 9(b) shows the test results for Series II (fine-grained) hydrogen-charged materials. In addition, Table 10(a) shows the test results for Series I (coarse-grained: annealed at 600°C for 1 hour) uncharged materials, and Table 10(b) shows the test results for Series I (coarse-grained material: annealed at 600°C for 1 hour) hydrogen-charged materials.

Table 7

| (a) S45C Uncharged material | | | | |
|---|---|---|---|---|
| Test piece | 0.2% offset yield strength ($N/mm^2$) | Tensile strength ($N/mm^2$) | Elongation (%) | Reduction of area (%) |
| S45C | 778 | 906 | 20 | 62 |

Table 8

| (b) S45C Hydrogen-charged material | | | | | |
|---|---|---|---|---|---|
| Test piece | 0.2% offset yield strength ($N/mm^2$) | Tensile strength ($N/mm^2$) | Elongation (%) | Reduction of area (%) | Amount of hydrogen (mass ppm) |
| S45C | 808 | 921 | 18 | 50 | 1 |

Table 8

| (a) Series I (fine-grained) uncharged material | | | | |
|---|---|---|---|---|
| Test piece | 0.2% offset yield strength ($N/mm^2$) | Tensile strength ($N/mm^2$) | Elongation (%) | Reduction of area (%) |
| V02-I | 1003 | 1007 | 10 | 69 |
| V04-I | 1017 | 1060 | 18 | 74 |
| Nb05-I | 682 | 860 | 14 | 76 |
| Ti03-I | 638 | 786 | 18 | 74 |

| (b) Series I (fine-grained) hydrogen-charged material | | | | | |
|---|---|---|---|---|---|
| Test piece | 0.2% offset yield strength ($N/mm^2$) | Tensile strength ($N/mm^2$) | Elongation (%) | Reduction of area (%) | Amount of hydrogen (mass ppm) |
| V02-I | 982 | 991 | 13.5 | 74 | 1.4 |
| V04-I | 1046 | 1071 | 14.9 | 70 | 3.4 |
| Nb05- I | 692 | 869 | 12.4 | 58 | 4.4 |
| Ti03- I | 676 | 786 | 12.8 | 62 | 3.5 |

| (c) Series I (fine-grained) hydrogen-charged material that was 3% pre-strained | | | | | |
|---|---|---|---|---|---|
| Test piece | 0.2% offset yield strength ($N/mm^2$) | Tensile strength ($N/mm^2$) | Elongation (%) | Reduction of area (%) | Amount of hydrogen (mass ppm) |
| V02-I | 964 | 966 | 12.6 | 75 | 1.2 |
| V04-I | 1078 | 1085 | 14.2 | 71 | 4.2 |
| Nb05-I | 832 | 888 | 9.7 | 56 | 4.2 |
| TiO3-I | 800 | 807 | 9.6 | 58 | 3.5 |

Table 9

| (a) Series II (fine-grained) uncharged material | | | | |
|---|---|---|---|---|
| Test piece | 0.2% offset yield strength ($N/mm^2$) | Tensile strength ($N/mm^2$) | Elongation (%) | Reduction of area (%) |
| Ti02- II | 671 | 790 | 20 | 79 |
| V02-II | 946 | 937 | 20 | 76 |
| Nb04- II | 772 | 883 | 18 | 74 |

| (b) Series II (fine-grained) hydrogen-charged material | | | | | |
|---|---|---|---|---|---|
| Test piece | 0.2% offset yield strength ($N/mm^2$) | Tensile strength ($N/mm^2$) | Elongation (%) | Reduction of area (%) | Amount of hydrogen (mass ppm) |
| Ti02- II | 683 | 789 | 18 | 69 | 5.37 |
| V02- II | 952 | 946 | 18 | 76 | 2.38 |
| Nb04- II | 778 | 885 | 17 | 65 | 4.31 |

Table 10

| (a) Series I (coarse-grained for 1 hour at 600°C) uncharged material | | | | |
|---|---|---|---|---|
| Test piece | 0.2% offset yield strength ($N/mm^2$) | Tensile strength ($N/mm^2$) | Elongation (%) | Reduction of area (%) |
| V02-I | 760 | 770 | 26 | 81 |
| V04-I | 808 | 861 | 22 | 77 |
| Nb05-I | 683 | 734 | 25 | 77 |
| Ti03-I | 455 | 546 | 33 | 78 |

| (b) Series I (coarse-grained for 1 hour at 600°C) hydrogen-charged material | | | | | |
|---|---|---|---|---|---|
| Test piece | 0.2% offset yield strength ($N/mm^2$) | Tensile strength ($N/mm^2$) | Elongation (%) | Reduction of area (%) | Amount of hydrogen (mass ppm) |
| V02-I | 731 | 746 | 28 | 78 | 1.2 |
| V04-I | 838 | 875 | 20 | 74 | 2.9 |
| Nb05- I | 635 | 737 | 19 | 69 | 2.4 |
| Ti03- I | 491 | 553 | 31 | 77 | 1.3 |

The amounts of hydrogen shown in these tables are the amounts of absorbed hydrogen in the specimens, as measured following tensile testing. Because the tensile test time is only about 15 minutes long, hydrogen release during the test is low. Here, in the test results shown in Table 7, even though hydrogen charging was carried out on S45C, decreases in the 0.2% offset yield strength and the tensile strength are not observed. On the other hand, decreases in the elongation and reduction of area are observed; in particular, the decrease in the reduction of area was pronounced. The reduction of area is generally used to assess the influence of hydrogen on the tensile properties. From the results in Table 7, it was possible to confirm a decrease in the reduction of area due to the influence of hydrogen in S45C having no additions of V, Nb or Ti.

In the test results shown in Tables 8 to 10, on comparing uncharged materials with hydrogen-charged materials, there were no large differences in the 0.2% offset yield strength (stress at the time of 0.2% plastic deformation) and the tensile strength in any of the specimens. This was the same as for S45C. However, a characteristic of Series I and Series II materials is that the reduction of area in hydrogen-charged materials exhibits no decrease or decreases only slightly if at all compared with that in uncharged materials. That is, by adding any one of the elements V, Nb or Ti to ferritic steel, the influence of hydrogen on the tensile properties can be decreased.

FIG. 14 shows the relationship between the relative reduction of area ϕH/ϕ and the amount of absorbed hydrogen. ϕH is the reduction of area for a hydrogen-charged material, and ϕ is the reduction of area for an uncharged material. Results for the carbon steel STPG370, which is regarded as a candidate material for gas pipelines, have also been included in the graph for the sake of comparison. In S45C and STPG370, the relative reduction of area decreases sharply as the amount of absorbed hydrogen $C_H$ rises. However, in Series I (fine-grained material, coarse-grained material) and Series II (fine-grained material) ferritic steels with trace element (V, Nb, Ti) additions, the decrease in the relative reduction of area is gradual and the reduction of area performance is greatly improved. It was confirmed from these results that the addition of a trace amount of V, Ti or Nb has a desirable effect on recovery from a decline in the reduction of area (ductility).

Here, on comparing two materials having 0.20 mass % additions of V, namely V02-I (fine-grained material) and V02-I (coarse-grained material), with V02-II (fine-grained material) having a 0.27 mass % addition of V and V04-I (fine-grained material) and V04-I (coarse-grained material) having 0.40 mass % additions of V, it can be confirmed that there are no clear differences in the relative reduction of area. Hence, it is not necessarily the case that all the carbon must be fixed in order to improve the reduction of area and make ferritic steel capable of withstanding use in a hydrogen atmosphere. While adding sufficient additive to fix all the carbon is of course acceptable, because V, Ti and Nb are all expensive, when taking cost into account, it is desirable to minimize the amounts in which these are used.

5-2. Fatigue Properties

FIG. 15 shows the relationship between the S-N properties of a smooth specimen of S45C, i.e., the stress amplitude σa (stress amplitude Δσ = (maximum stress σmax - minimum stress σmin) × 1/2), and the failure life. In the diagram, the residual amount of hydrogen (mass ppm) measured in a sample cut from the fatigue failure specimen is also shown. Because the testing time extends to 66 hours at the lowest cycle speed 0.02 Hz, the residual amount of hydrogen in this case was only 0.42 mass ppm. However, in high-speed tests at 0.2 Hz and 2 Hz, the residual amounts of hydrogen were respectively 0.71 mass ppm and 1.03 mass ppm, indicating that much hydrogen remained. From FIG. 15, regardless of the cycle speed, the failure life of the hydrogen-charged material agreed substantially with the results for the uncharged material, and so no influence by hydrogen was observable.

FIG. 16 shows the S-N properties of S45C notched specimens. In this case as well, with the exception of the lowest cycle speed 0.02 Hz, much hydrogen remained. When the fatigue lives of hydrogen-charged materials at test rates of 0.2 Hz, 2 Hz and 30 Hz were compared with the results for the respective uncharged materials, the fatigue life of the hydrogen-charged material became progressively shorter at lower cycle speeds. In this diagram, the fatigue life at a cycle speed of 30 Hz was from about 15,000 to about 35,000 cycles, the fatigue life at 2 Hz was about 6,000 cycles, and the fatigue life at 0.2 Hz was about 2,000 cycles. The fatigue lives do not shorten from 0.2 Hz to 0.02 Hz, indicating that saturation occurs once the fatigue life decreases to about 6 to 13% of the fatigue life at 30 Hz.

Summarizing the results in FIGS. 15 and 16, in ordinary materials such as S45C, the S-N properties (fatigue crack generation) obtained with a smooth specimen do not incur a hydrogen influence, but the S-N properties obtained with a notched specimen (fatigue crack propagation) do incur a hydrogen influence. Hence, the S-N properties obtained with a notched specimen were examined in fine-grained materials. As shown in FIG. 17, in the comparison base steel, the fatigue life at a cycle speed of 30 Hz was about 30,000 to 100,000 cycles, the fatigue life at 2 Hz was about 12,000 cycles, and the fatigue life at 0.2 Hz was about 6,000 cycles. The fatigue life did not shorten from 0.2 Hz to 0.02 Hz, indicating that saturation occurs once the fatigue life decreases to about 6 to 20% of the life at 30 Hz.

As shown in FIG. 18, in the Series II material Ti02-II (fine-grained material) with Ti addition, the fatigue life at a cycle speed of 30 Hz is from about 80,000 to about 300,000 cycles, the fatigue life at 2 Hz is about 50,000 cycles, and the fatigue life at 0.2 Hz is about 45,000 cycles. Here, the fatigue life decreases to about 15 to 56% of the fatigue life at 30 Hz, although the degree of decrease is more gradual than in the above-described S45C and comparison base steel. That is, Ti02-II has a fatigue life (the ratio of the life at 0.2 Hz to the life at 30 Hz) which is from 2.5 to 4.3 times that of S45C, and from 2.5 to 2.8 times that of the comparison base steel.

As shown in FIG. 19, in the Series II material V02-II (fine-grained material) with V addition, the fatigue life at a cycle speed of 30 Hz is about 30,000 to 90,000 cycles, the fatigue life at 2 Hz is about 10,000 cycles, and the fatigue life at 0.2 Hz is about 8,000 cycles. Here, the fatigue life decreases to about 9 to 27% of the fatigue life at 30 Hz. That is, V02-II has a fatigue life (the ratio of the life at 0.2 Hz to the life at 30 Hz) which is from 1.5 to 2.1 times that of S45C, and about 1.5 times that of the comparison base steel. As shown in FIG. 20, in the Series II material Nb04-II (fine-grained material) with Nb addition, the fatigue life at a cycle speed of 30 Hz is about 90,000 to 350,000 cycles, the fatigue life at 2 Hz is about 40,000 cycles, and the fatigue life at 0.2 Hz is about 50,000 cycles. Here, the fatigue life decreases to about 12 to 56% of the life at 30 Hz. That is, Nb02-II has a fatigue life (the ratio of the life at 0.2 Hz to the life at 30 Hz) which is from 2 to 4.3 times that of S45C, and about 2 to 2.8 times that of the comparison base steel. These results indicate that, in fine-grained materials with trace additions of Ti, V or Nb, the hydrogen-induced fatigue crack propagation properties improve.

As shown in FIG. 21, with regard to V005 (fine-grained material), the fatigue life at a cycle speed of 30 Hz is about 20,000 cycles, the fatigue life at 2 Hz is about 8,000 cycles, and the fatigue life at 0.2 Hz is about 6,000 cycles. Here, the fatigue life decreases to about 30% of the life at 30 Hz. That is, V0005 has a fatigue life (the ratio of the life at 0.2 Hz to the life at 30 Hz) which is from 2.3 to 5 times that of S45C, and from about 1.5 to about 5 times that of the comparison base steel. As indicated by these results, even when V is added in about one-fourth the amount required to fix all the carbon, the hydrogen-induced fatigue crack propagation properties can be improved.

As shown in FIG. 22, with regard to V007-Nb01-Ti007 (fine-grained material), the fatigue life at a cycle speed of 30 Hz is about 30,000 cycles, the fatigue life at 2 Hz is about 15,000 cycles, and the fatigue life at 0.2 Hz is about 12,000 cycles. Here, the fatigue life decreases to about 60% of the life at 30 Hz. That is, this material has a fatigue life (the ratio of the life at 0.2 Hz to the life at 30 Hz) which is from 4.6 to 10 times that of S45C, and from about 3 to about 10 times that of the comparison base steel. As indicated by these results, when all three elements V, Nb and Ti are added and the collective amount of these elements is about the same as the amount required to fix all the carbon, extremely good fatigue crack propagation properties were obtained.

Based on the above results, the influence of hydrogen on the fatigue crack propagation properties were carefully studied. FIGS. 23 to 28 show the fatigue crack propagation properties, i.e., the relationship between the fatigue crack propagation rate da/dN (mm/cycle) and the stress intensity factor range $\Delta K$ (MPa·m$^{1/2}$). The fatigue crack propagation properties of S45C are shown in FIGS. 23 to 26, those of the Series I material V02-I (fine-grained material) are shown in FIG. 27, and those of the Series II material V02-II (coarse-grained material: annealed one hour at 700°C) are shown in FIG. 28. Also, the fatigue crack propagation properties of V005 (fine-grained material) are shown in FIG. 29, and those of V007-Nb01-Ti007 (fine-grained material) are shown in FIG. 30. In each of these figures, the amount of absorbed hydrogen (mass ppm) measured after testing is shown below the fatigue crack propagation curves for the hydrogen-charged materials. The testing time was set to 30 hours or less in order to minimize hydrogen release during the test. Hence, the influence of hydrogen release during testing on the fatigue crack propagation properties was small.

FIG. 23 shows fatigue crack propagation curves for uncharged material and hydrogen-charged material when the stress ratio R is 0.1. The difference between the two curves can be clearly distinguished. In particular, when $\Delta K$ = 7.0 MPa·m$^{1/2}$, because the uncharged material has a da/dN of about $9\times10^{-8}$ (mm/cycle) and the hydrogen-charged material has a da/dN of about $3\times10^{-6}$ (mm/cycle), the crack propagation rate da/dN of the hydrogen-charged material can be seen to represent an up to 30-fold acceleration over that in uncharged material. Also, as shown in FIGS. 24, 25 and 26, even in cases where differing stress ratios R were used, the fatigue crack propagation curves for uncharged material and hydrogen-charged material can be clearly distinguished; the crack propagation rate da/dN of the hydrogen-charged materials was found to represent an acceleration of at least 10-fold compared with uncharged materials.

With regard to the Series I material V02-I (fine-grained material) shown in FIG. 27, the fatigue crack propagation properties of the uncharged material and the hydrogen-charged material are very similar to each other, making it impossible to distinguish between the fatigue crack propagation curves for both. That is, even in cases where hydrogen charging was carried out, substantially no acceleration of da/dN arose. Also, with regard as well to the Series II material V02-II (coarse-grained material: annealed one hour at 700°C) shown in FIG. 28, the fatigue cracking propagation properties of the uncharged material and the hydrogen-charged material were very similar, making it impossible to distinguish between the fatigue crack propagation curves for both. Hence, even when hydrogen charging was carried out, substantially no acceleration of da/dN arose.

FIG. 29 shows the fatigue crack propagation properties of V005 (fine-grained material) in which the amount of V addition has been reduced. When the stress ratio R is 0.1, the fatigue crack propagation curves for uncharged material and hydrogen-charged material can be said to generally coincide. On the other hand, when R = 0.6 to 0.9, the two curves separate at and above $\Delta K$ = 5 MPa·m$^{1/2}$, but below $\Delta K$ = 5 MPa·m$^{1/2}$ the two curves generally coincide and substantially no acceleration of fatigue crack propagation due to hydrogen charging is observable. Therefore, even with regard to the material V005, in which the amount of V addition was set at one-fourth of the amount required to fix all the carbon, it was possible to confirm effects due to V addition. However, at R = 0.6 and above and at $\Delta K$ = 5 MPa·m$^{1/2}$ and above, such effects cease to be clear and so it may be regarded as preferable to add one or more element selected from among V, Nb and Ti in at least one-fourth the amount required to fix all the carbon.

FIG. 30 shows the fatigue crack propagation properties of V007-Nb01-Ti007 (fine-grained material). Regardless of the stress ratio R, the fatigue crack propagation curves for the uncharged material and the hydrogen-charged material are very similar, with no separation being apparent. From these results, it is clearly advantageous to add all of the elements V, Nb and Ti and to have the collective amount of these be substantially the same as the amount required to fix all the carbon.

Based on the experimental results in FIGS. 23 to 28 and also the results of additional experiments that were carried out, FIG. 31 shows the relationship between the fatigue relative crack propagation rate for hydrogen-charged materials and uncharged materials between the cycle speed f at R = 0.5 and $\Delta K$ = 10 MPa·m$^{1/2}$. The ordinate represents the fatigue relative crack propagation rate $(da/dN)_H/(da/dN)$. Here, $(da/dN)_H$ is the fatigue crack propagation rate of the hydrogen-charged material, and da/dN is the fatigue crack propagation rate of the uncharged material. The abscissa represents the cycle speed f (Hz). The fatigue relative crack propagation rate of S45C (indicated by the symbol O in FIG. 31) is about 30 at a cycle speed f = 0.2 Hz, about 30 at f = 2 Hz, and about 4 at f = 30 Hz. With hydrogen charging, the fatigue crack propagation rate is accelerated up to 30-fold.

In the case of the comparison base steel (fine-grained material) (Δ in FIG. 31), the fatigue relative crack propagation rate is about 5 at the cycle speed f = 0.2 Hz, about 4 at f = 2 Hz, and about 3 at f = 30 Hz. However, with regard to the fine-grained material V02-I V (D in FIG. 31) and the coarse-grained material V02-II (0 in FIG. 31), each of which has a trace amount of V addition, in both of these cases, the fatigue relative crack propagation rate is about 2 at the cycle speed f = 0.2 Hz, about 2 at f = 2 Hz, and about 1 at f = 30 Hz, demonstrating that the hydrogen-induced acceleration of fatigue crack propagation rate can be greatly ameliorated due to a trace amount of V addition. Moreover, from the results for the fine-grained material V02-I (□ in FIG. 31), sufficient improvement effects can be obtained, even with regard to the fatigue crack propagation rate, by adding a smaller amount of V than the amount $V^C$ required to fix the carbon. In other words, it is not necessarily essential to fix all the carbon in order to improve the fatigue crack propagation rate.

With regard to V005 (fine-grained material), as shown in FIG. 31, the fatigue relative crack propagation rate is about 3.5 at a cycle speed f = 0.2 Hz, is about 3 at f = 2 Hz, and is about 2.8 at f = 30 Hz. Hence, compared with the comparison base steel (fine-grained material), it was possible to ameliorate hydrogen-induced acceleration of the fatigue crack propagation rate. However, the effects compared with the fine-grained material V02-I (□ in FIG. 31) and the coarse-grained material V02-II (0 in FIG. 31) are limited and, as can be seen also by comparison with other results presented in the same graph, when the amount of V addition is reduced even further from that in V005, advantageous effects cease to be observable relative to the comparison base steel (fine-grained material). Based on these results as well, it can be said that the lower limit in the amount of addition for obtaining a fatigue crack propagation acceleration-ameliorating effect is about one-fourth of the amount required to fix all the carbon. With regard to the fine-grained material V007-Nb01-Ti007, this exhibits properties comparable to or better than those of the fine-grained material V02-I (□ in FIG. 31) and the coarse-grained material V02-II (0 in FIG. 31), and so fatigue crack propagation rate-ameliorating effects from adding all of elements V, Nb and Ti and setting the collective amount of these elements to about the same amount as that required to fix all the carbon were observed.

FIG. 32 is a graph showing the relationship between the relative fatigue life $Nf/(Nf)_H$ at $\sigma a$ = 350 MPa and the cycle speed f, based on the S-N curves for notched specimens (FIGS. 16 to 20). Here, Nf is the number of cycles to failure of the uncharged material, and $(Nf)_H$ is the number of cycles to failure of the hydrogen-charged material. When specimens having a sharp notch (Kt = 3.7) are used, the relative fatigue life of S45C is about 10 at a cycle speed f = 0.2 Hz, about 3.5 at f = 2 Hz, and about 1.2 at f = 30 Hz. The relative fatigue life of the comparison base steel is about 5 for a cycle speed f = 0.2 Hz, about 3 for f = 2 Hz, and about 1.1 for f = 30 Hz.

In the case of the fine-grained material Ti02-II with a trace amount of Ti addition, the relative fatigue life is about 1.2 at a cycle speed f = 0.2 Hz, about 1.0 at f = 2 Hz, and about 0.6 at f = 30 Hz. In the case of the fine-grained material V02-II with a trace amount of V addition, the relative fatigue life is about 2.3 at a cycle speed f = 0.2 Hz, about 1.9 at f = 2 Hz, and about 0.9 at f = 30 Hz. Hence, the ratio $Nf/(Nf)_H$ and the ratio $(da/dN)_H/(da)/(dN)$ shown in FIG. 31 substantially coincide. In the case of the fine-grained material Nb04-II with a trace amount of Nb addition, the relative fatigue life is about 1.3 at a cycle speed f = 0.2 Hz, about 1.9 at f = 2 Hz, and about 0.9 at f = 30 Hz. From these results, not only in cases where a trace amount of V has been added, but also in cases where a trace amount of Ti or Nb has been added, there can be said to be an ameliorating (i.e., suppressing) effect on the hydrogen-induced acceleration of fatigue crack propagation.

With regard to the fine-grained material V005, as shown in FIG. 32, compared with the comparison base steel (fine-grained material), this has a slight relative fatigue life-improving effect. Therefore, when trying to improve the relative fatigue life, it may regarded as essential to set the amount of addition to at least about one-fourth the amount required to fix all the carbons. At the same time, the fine-grained material V007-Nb01-Ti007 exhibits properties comparable to or better than those of the fine-grained material V02-II (0 in FIG. 32), from which it was possible to confirm that adding all the elements V, Nb and Ti and setting the collective amount of addition thereof to about the same amount as that required to fix all the carbon has a relative fatigue life-improving effect.

## INDUSTRIAL APPLICABILITY

The invention provides ferritic steels which are capable of being used under a hydrogen atmosphere. The ferritic steels of the invention can be employed as structural materials in hydrogen energy systems such as fuel cell vehicles, and in hydrogen energy infrastructure such as hydrogen stations.

## Claims

1. A hydrogen fatigue-resistant ferritic steel, comprising, with one or more element selected from among vanadium (V), titanium (Ti) and niobium (Nb) being added, a carbide or carbides of one or more element selected from among V, Ti and Nb in a structure composed primarily of ferrite grains, wherein
the ferritic steel exhibits improvement in reduction of area and in a fatigue crack propagation rate in a hydrogen atmosphere.

2. The hydrogen fatigue-resistant ferritic steel of claim 1, wherein the structure is composed primarily of fine ferrite grains having a diameter of 1 μm or less.

3. The hydrogen fatigue-resistant ferritic steel of claim 1, wherein the structure is composed primarily of coarse ferrite grains having a diameter of from several micrometers to 20 μm.

4. The hydrogen fatigue-resistant ferritic steel of claim 1, wherein the structure is composed primarily of coarse ferrite grains having a diameter of from several micrometers to 60 μ.

5. The hydrogen fatigue-resistant ferritic steel of any one of claims 1 to 4, wherein the one or more element selected from among V, Ti and Nb has been added in at least the amount required to fix all carbon (C) in the structure as the carbide or carbides.

6. The hydrogen fatigue-resistant ferritic steel of any one of claims 1 to 4, comprising carbides of all the elements V, Ti and Nb, wherein
the V, Ti and Nb have been added in a collective amount which is substantially the same as the amount required to fix all carbon (C) in the structure as the carbides.

7. The hydrogen fatigue-resistant ferritic steel of any one of claims 1 to 4, wherein the one or more element selected from among V, Ti and Nb has been added in an amount which is less than, but at least one-fourth of, the amount required to fix all carbon (C) in the structure as the carbide or carbides.

8. The hydrogen fatigue-resistant ferritic steel of any one of claims 1 to 4, wherein, of the V, Ti and Nb, the only element that has been used as an additive is V, and the V has been added in an amount which is less than the amount required to fix all carbon (C) in the structure as a carbide of V.

9. The hydrogen fatigue-resistant ferritic steel of any one of claims 1 to 4, wherein, of the V, Ti and Nb, the only element that has been used as an additives is V, and the V has been added in an amount which is less than, but at least one-fourth of, the amount required to fix all carbon (C) in the structure as a carbide of V.

10. A method of manufacturing a hydrogen fatigue-resistant ferritic steel, the method comprising a step of adding one or more element selected from among vanadium (V), titanium (Ti) and niobium (Nb) so as to include a carbide or carbides of one or more element selected from among V, Ti and Nb in a structure composed primarily of ferrite grains, and thereby improving the reduction of area and fatigue crack propagation rate of ferritic steel in a hydrogen environment.

11. The method of manufacturing a hydrogen fatigue-resistant ferritic steel of claim 10, wherein the one or more element selected from among V, Ti and Nb is added in at least the amount required to fix all carbon (C) in the structure as the carbide or carbides.

12. The method of manufacturing a hydrogen fatigue-resistant ferritic steel of claim 10, wherein the ferritic steel includes carbides of all the elements V, Ti and Nb, and V, Ti and Nb are added in a collective amount which is substantially the same as the amount required to fix all carbon (C) in the structure as the carbides.

13. The method of manufacturing a hydrogen fatigue-resistant ferritic steel of claim 10, wherein the one or more element selected from among V, Ti and Nb is added in an amount which is less than, but at least one-fourth of, the amount required to fix all carbon (C) in the structure as the carbide or carbides.

14. The method of manufacturing a hydrogen fatigue-resistant ferritic steel of claim 10, wherein, of the V, Ti and Nb, the only element to be added is V, said V being added in an amount which is less than the amount required to fix all carbon (C) in the structure as a carbide of V.

**15.** The method of manufacturing a hydrogen fatigue-resistant ferritic steel of claim 10, wherein, of the V, Ti and Nb, the only element to be added is V, said V being added in an amount which is less than, but at least one-fourth of, the amount required to fix all carbon (C) in the structure as a carbide of V.

FIG. 1(a)

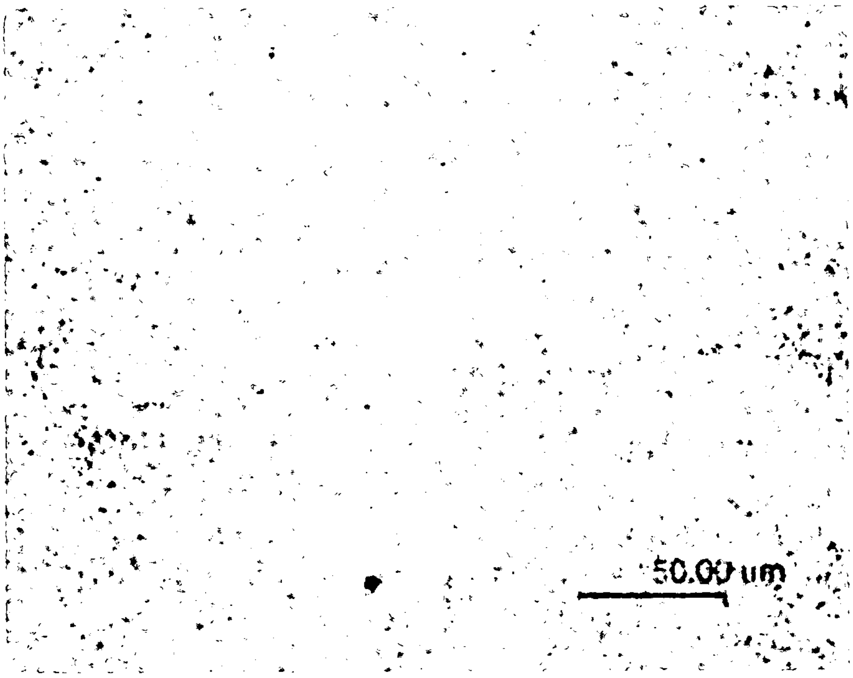


TRANSVERSE SECTION

FIG. 1(b)

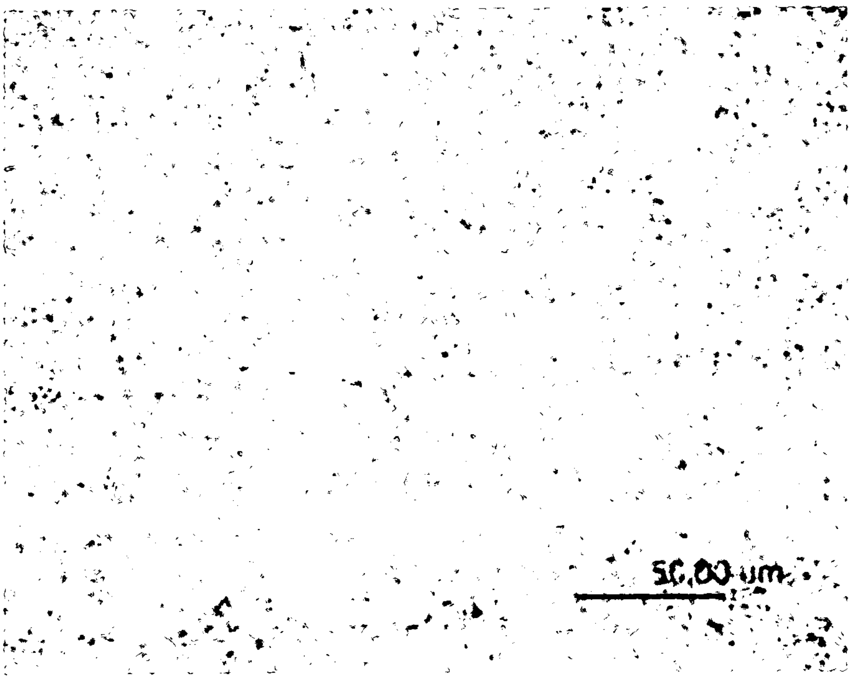


LONGITUDINAL SECTION

FIG. 2

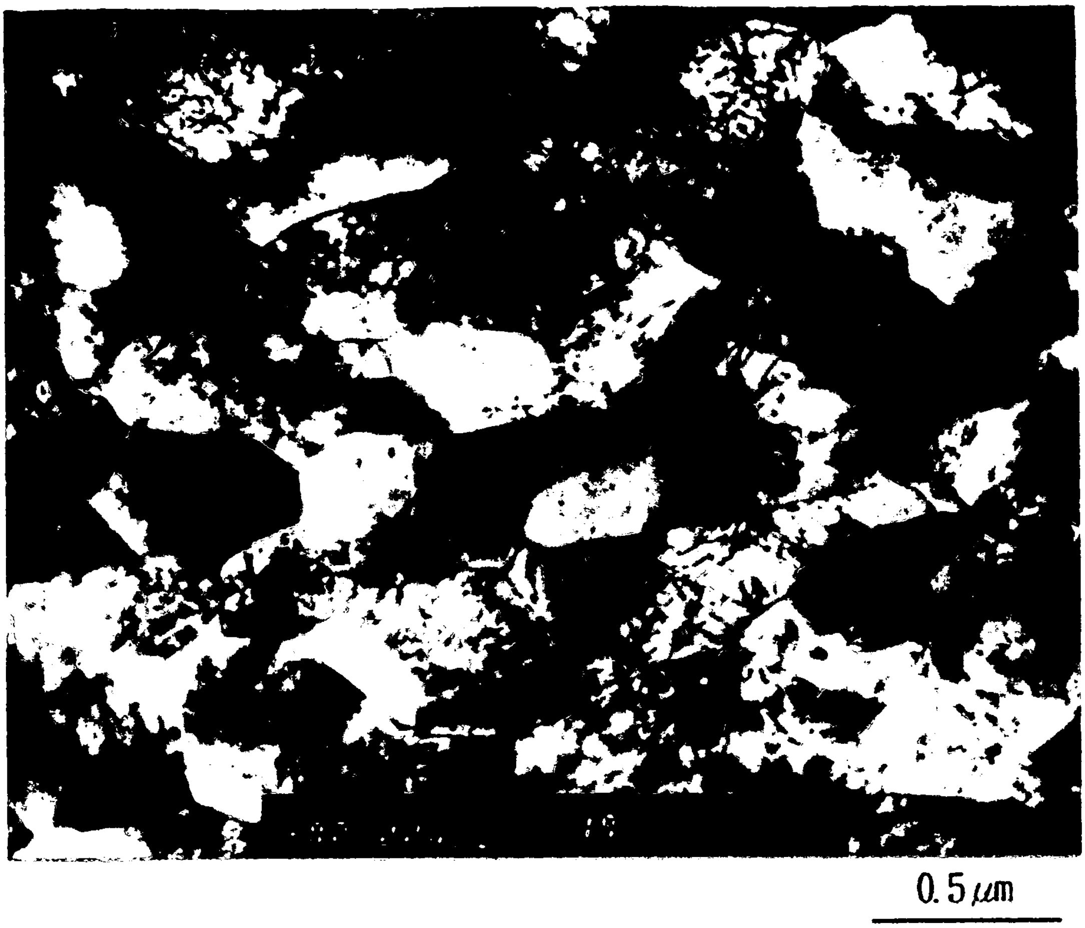

FIG. 3

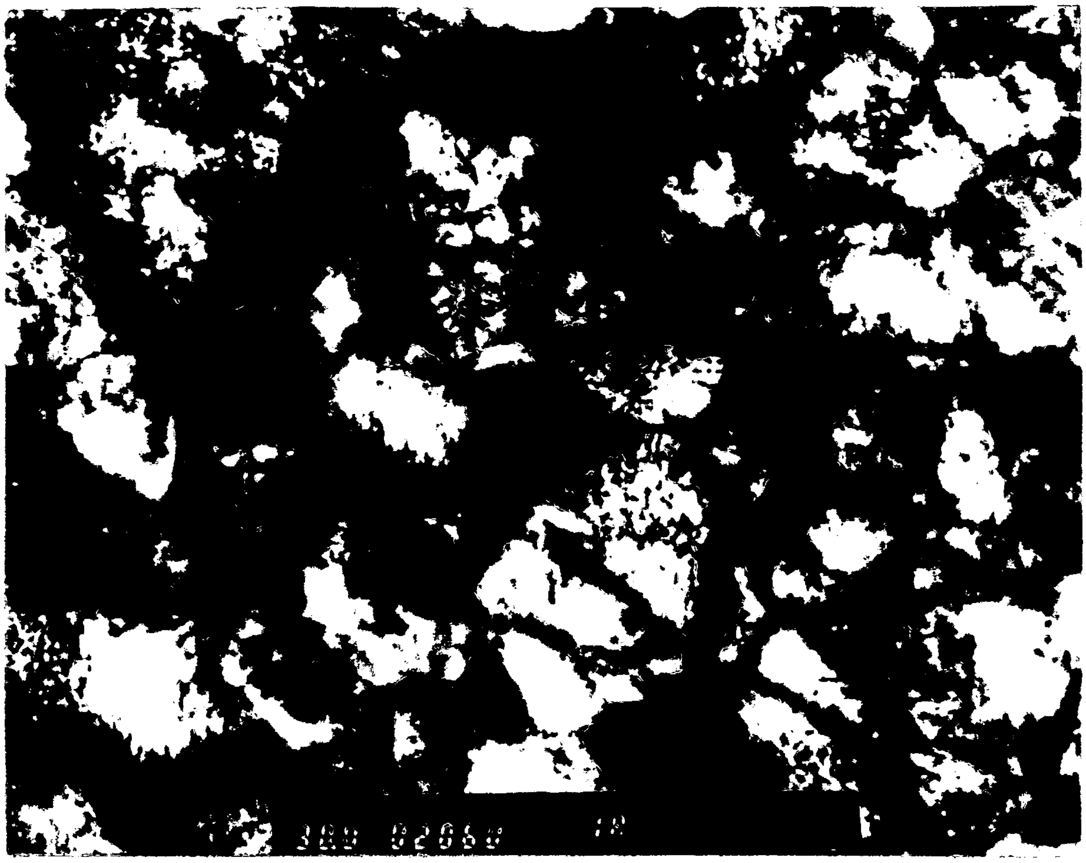

0.5 µm

FIG. 4

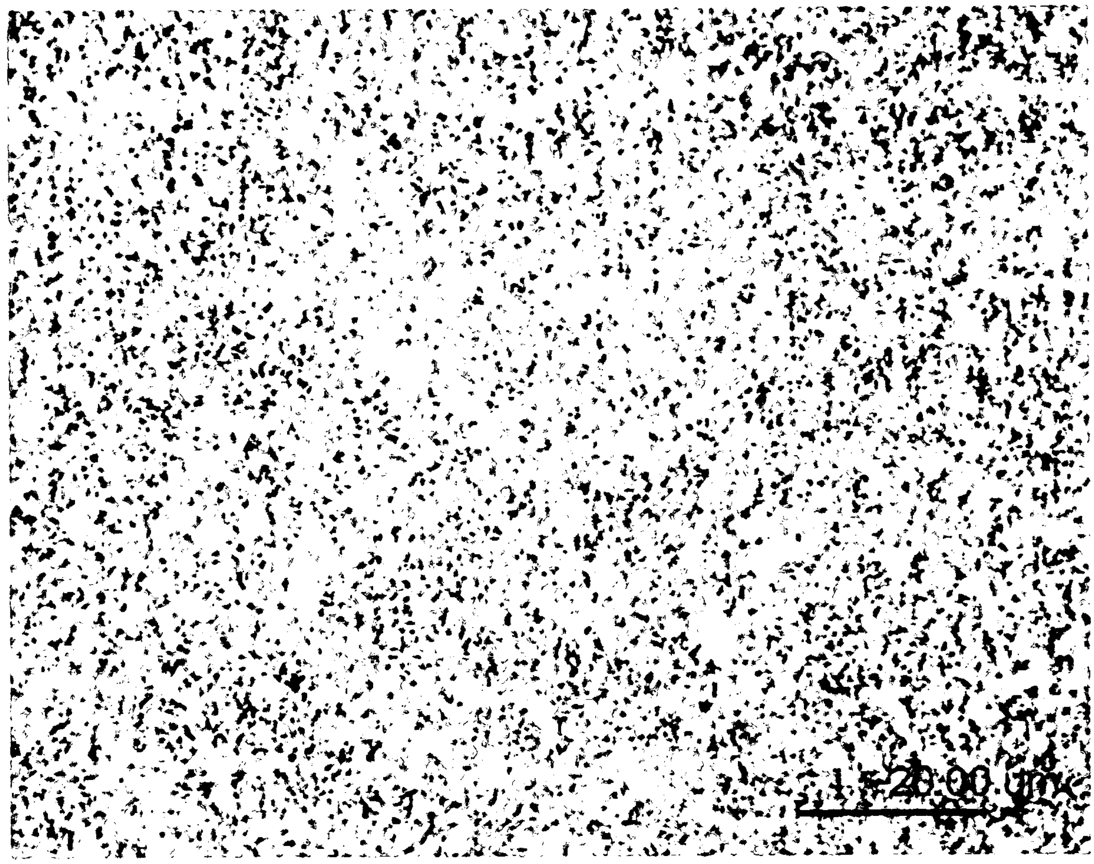

FIG. 5

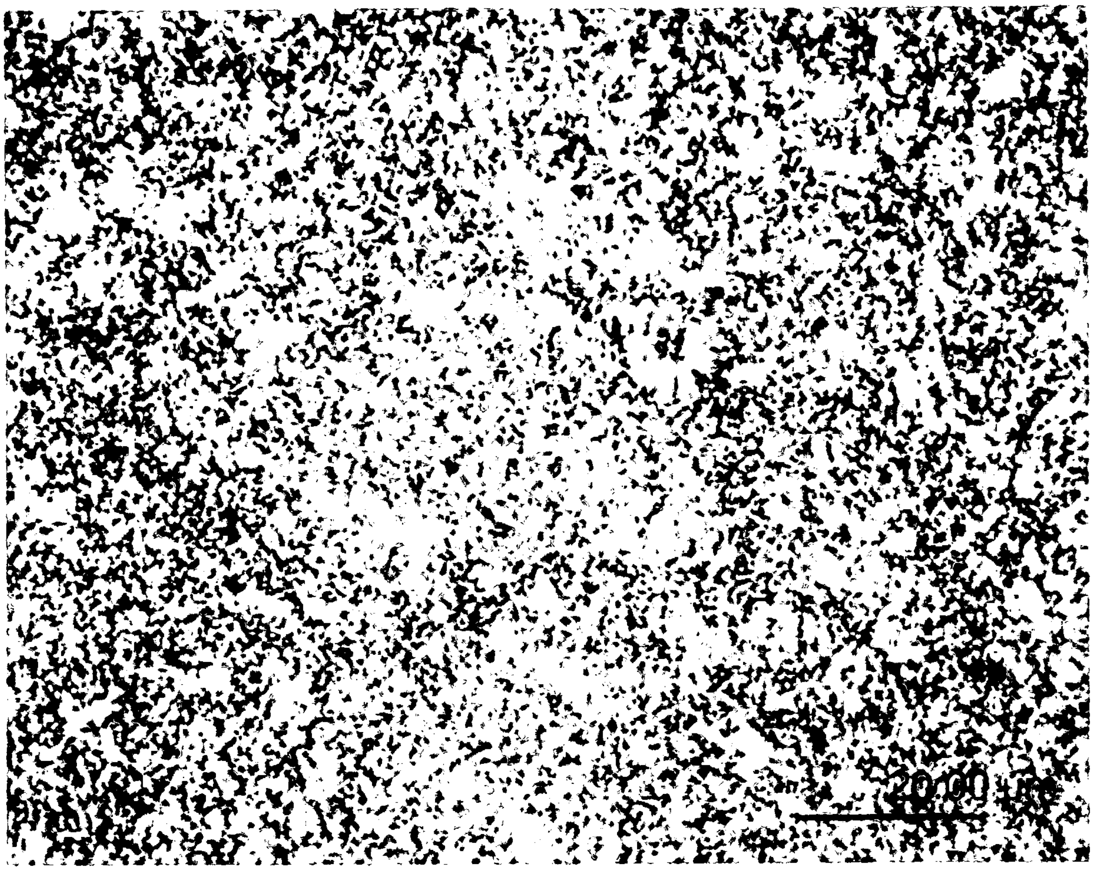

FIG. 6

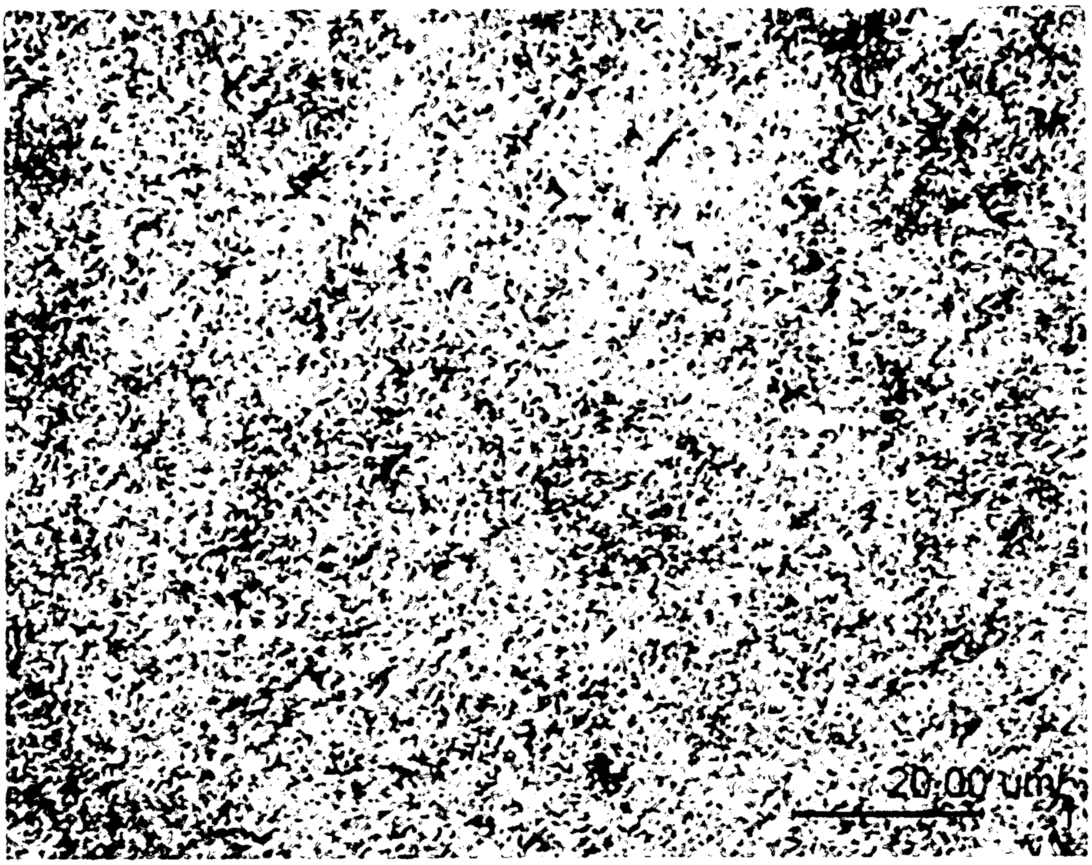

FIG. 7

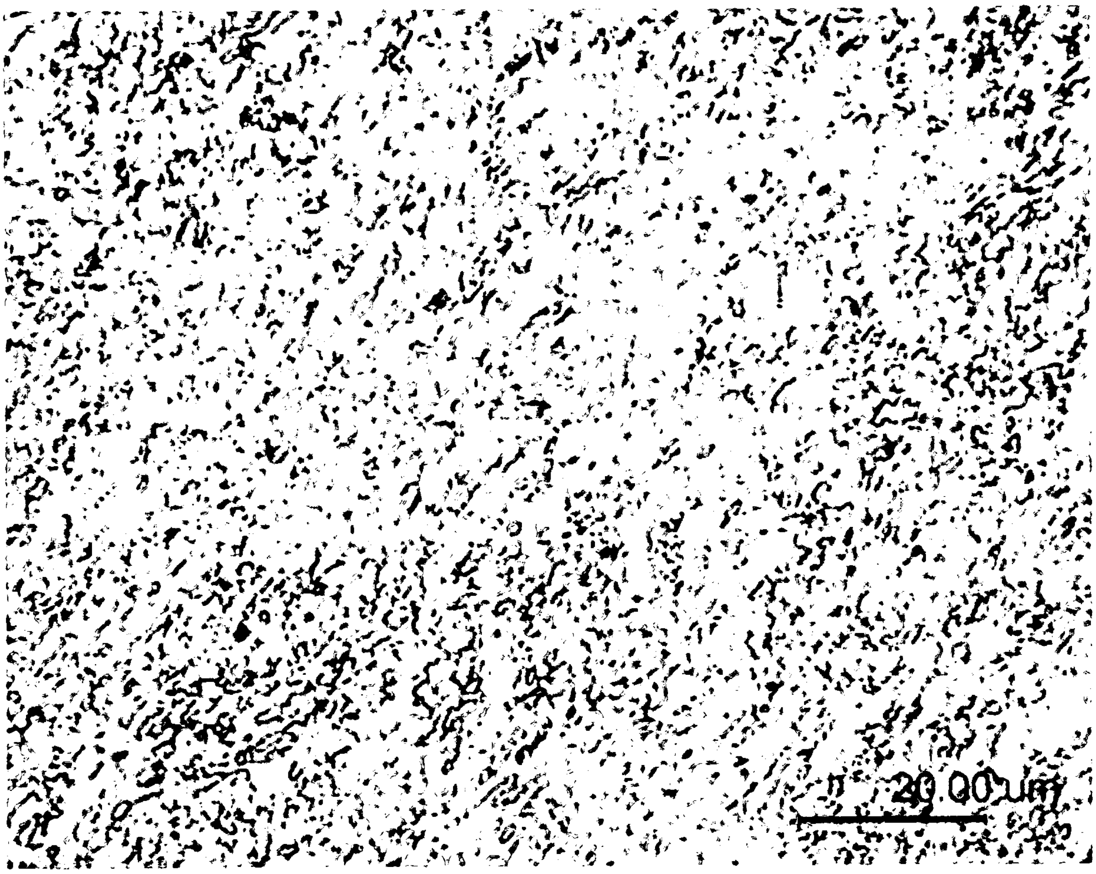

FIG. 8(a)

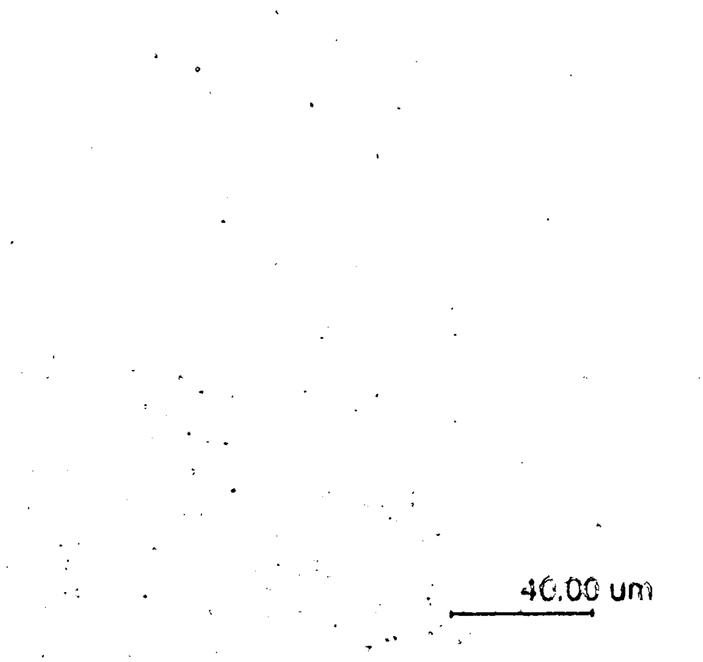


V02-II, TRANSVERSE SECTION

FIG. 8(b)

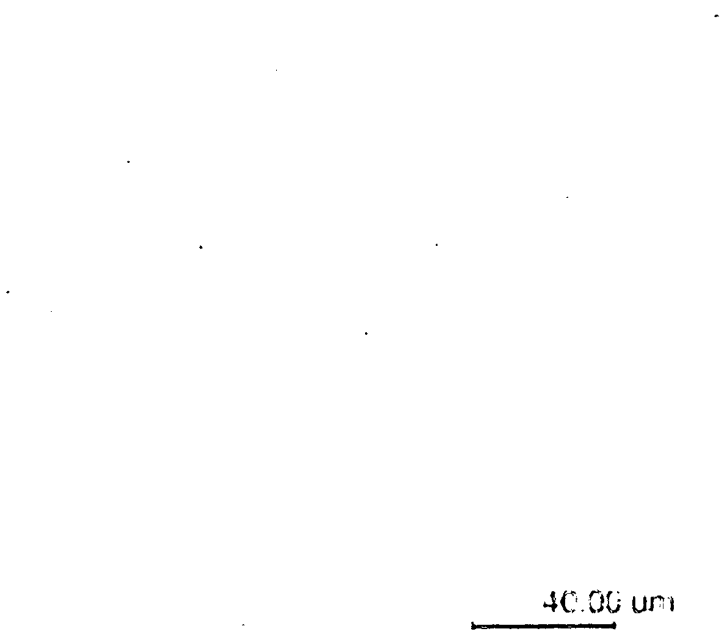


V02-II, LONGITUDINAL SECTION

FIG. 9(a)

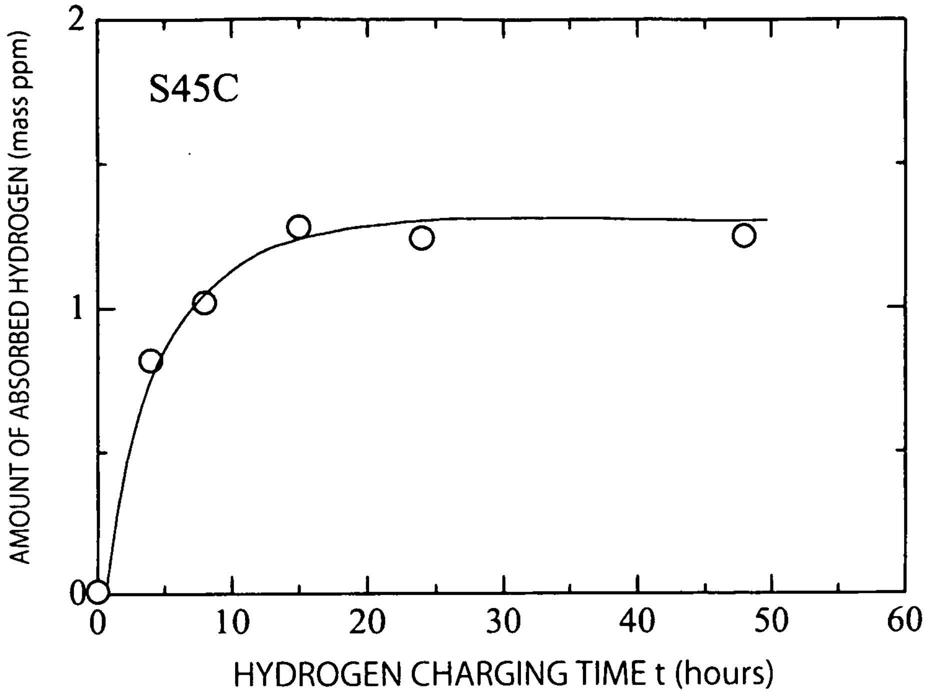


QUENCHED AND TEMPERED S45C STEEL

FIG. 9(b)

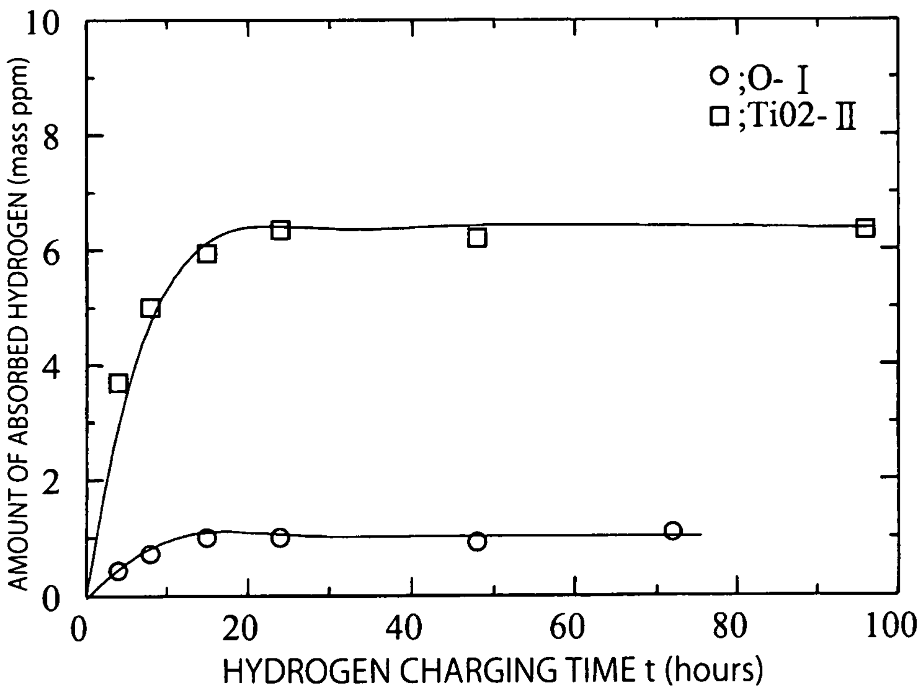


EXAMPLES OF FINE-GRAINED BASE STEEL, AND FINE-GRAINED MATERIAL WITH TRACE ELEMENT ADDITION

FIG. 10(a)

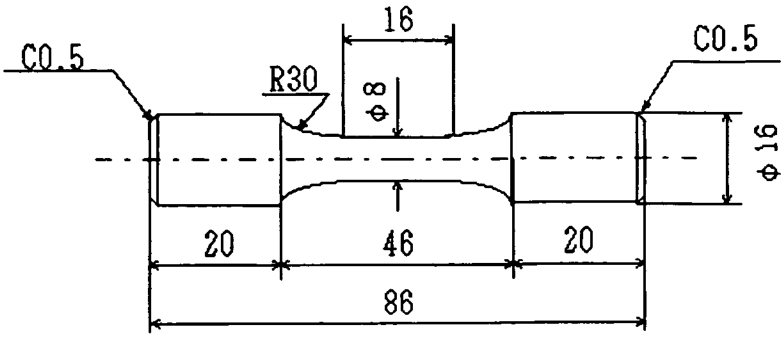


SMOOTH SPECIMEN

FIG. 10(b)

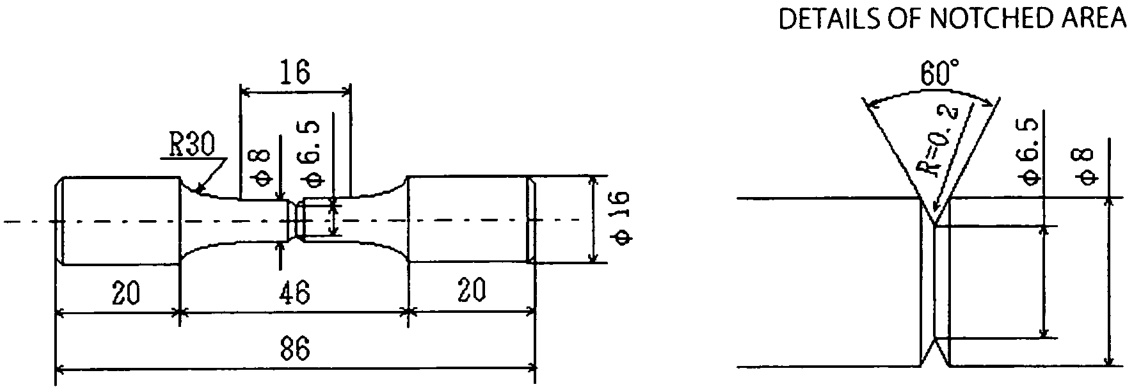


NOTCHED SPECIMEN

FIG. 11(a)

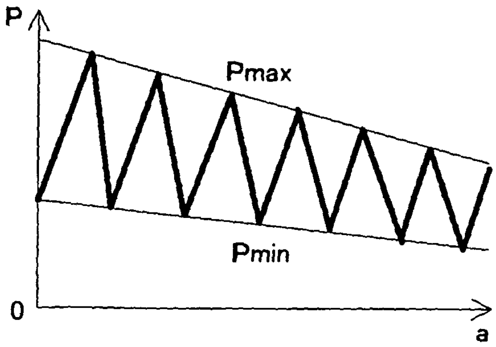


ΔK REDUCING METHOD AT CONSTANT R

FIG. 11(b)

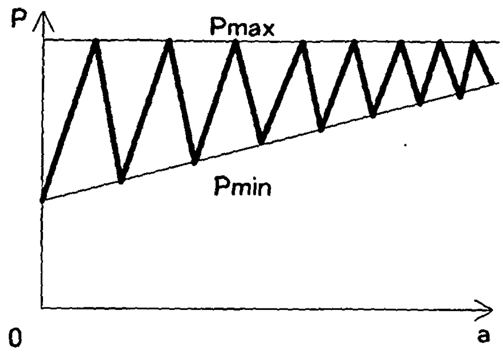


ΔK REDUCING METHOD AT CONSTANT Pmax

FIG. 12(a)

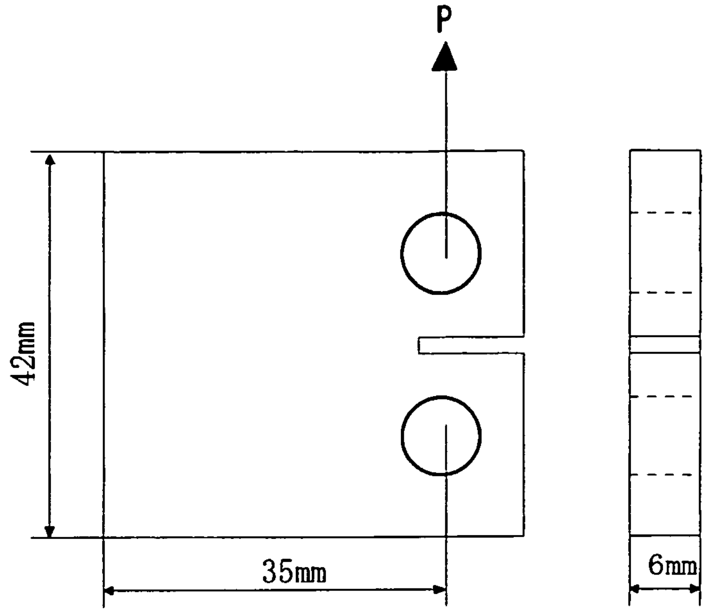


CT SPECIMEN

FIG. 12(b)

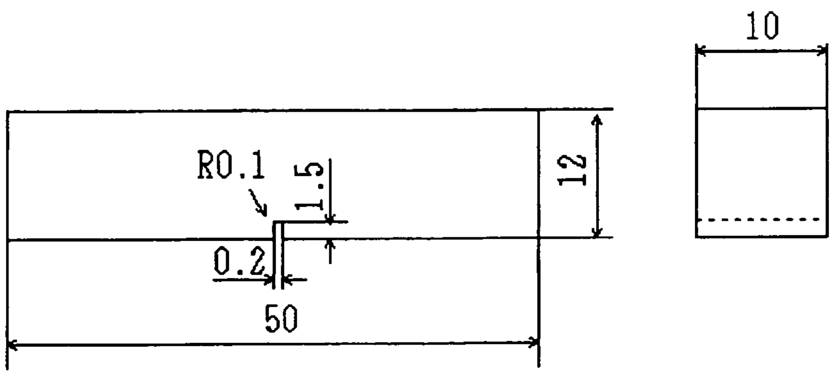


PLATE-TYPE BENDING SPECIMEN

FIG. 13

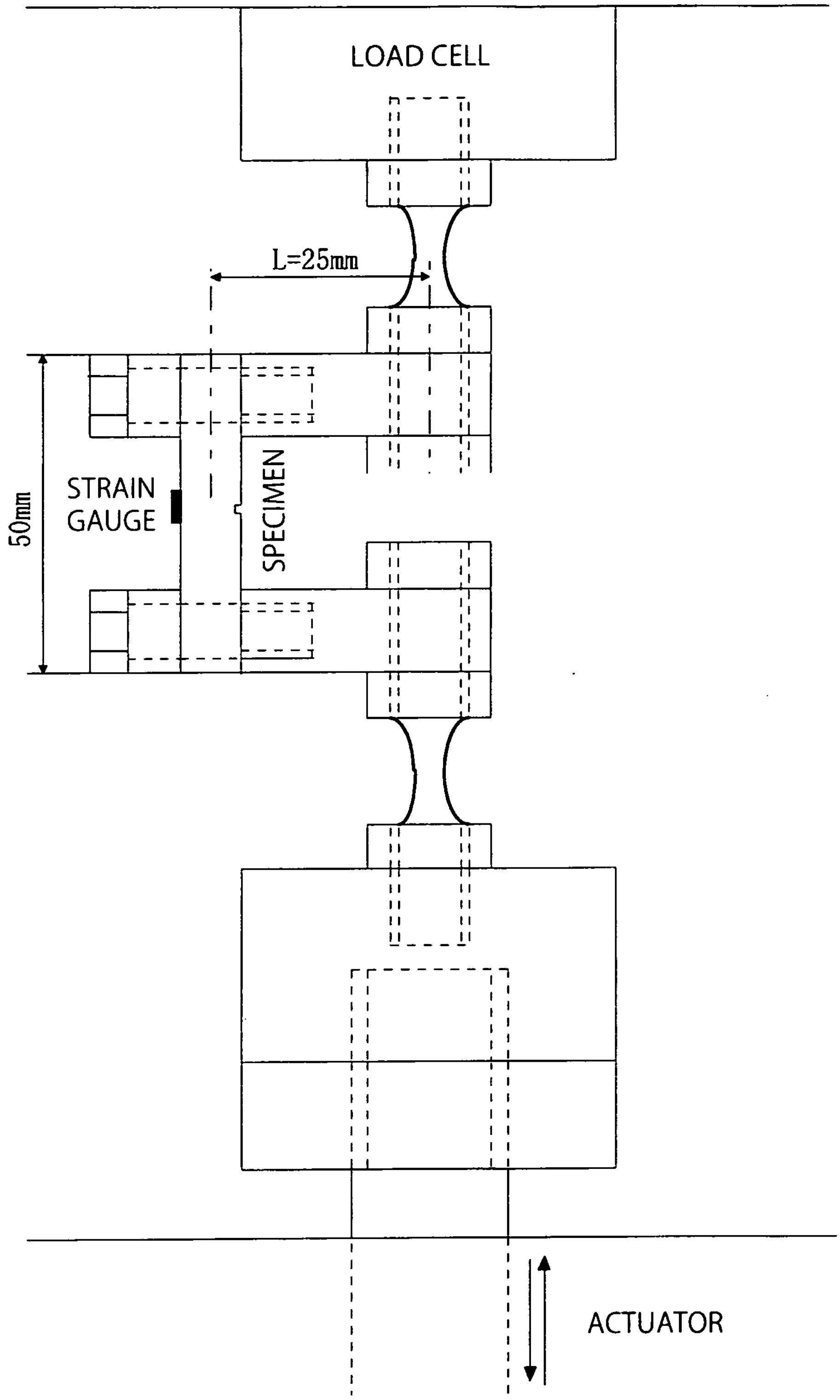

FIG. 14

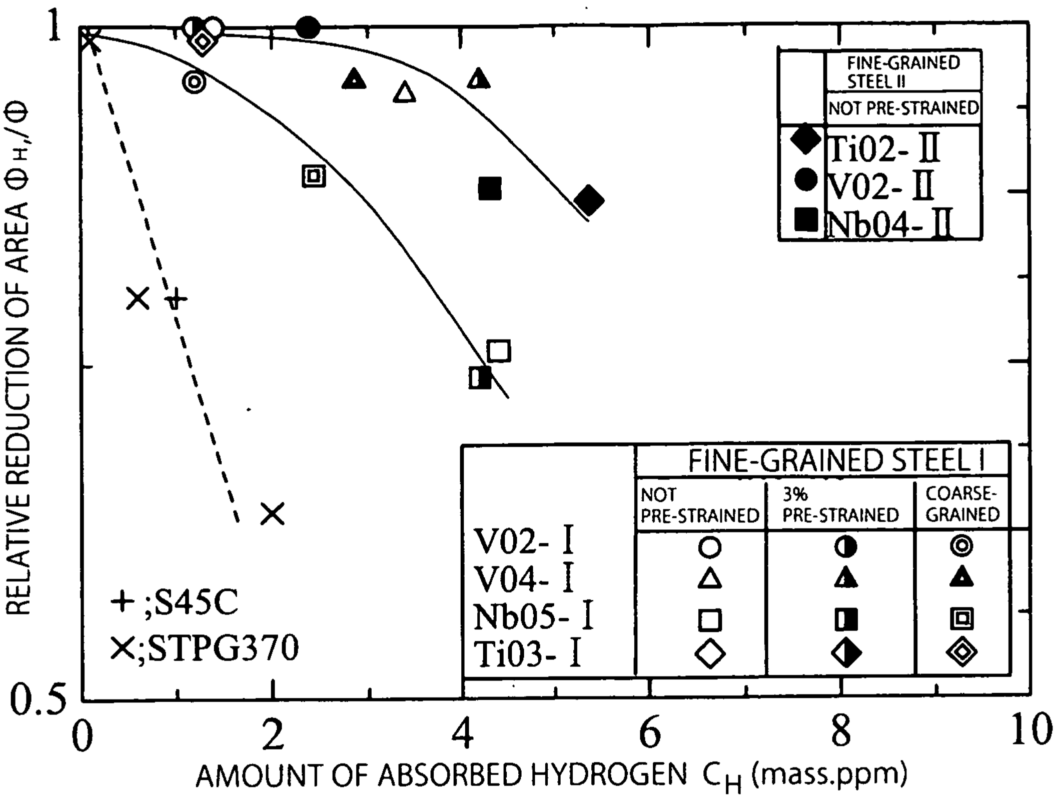
1
0.5
RELATIVE REDUCTION OF AREA ΦH,/Φ
0
2
4
6
8
10
AMOUNT OF ABSORBED HYDROGEN CH (mass.ppm)
FINE-GRAINED STEEL II
NOT PRE-STRAINED
Ti02- II
V02- II
Nb04- II
+ ;S45C
×;STPG370
FINE-GRAINED STEEL I
NOT PRE-STRAINED
3% PRE-STRAINED
COARSE-GRAINED
V02- I
V04- I
Nb05- I
Ti03- I

FIG. 15

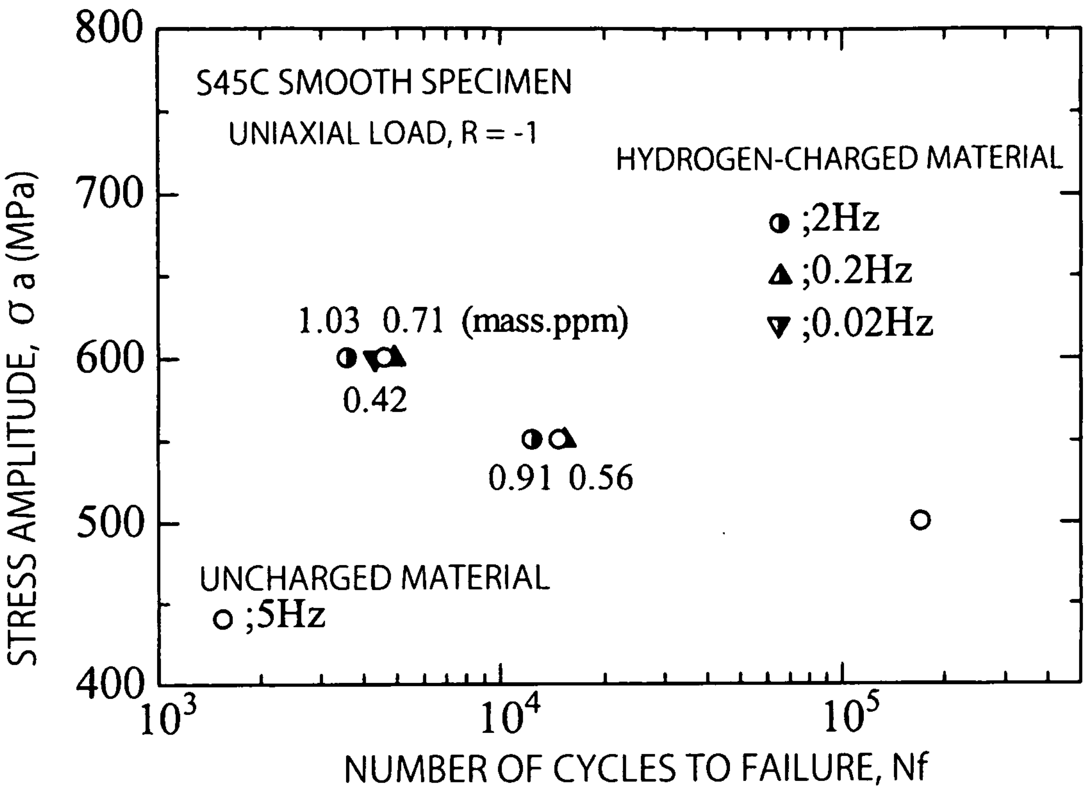
S45C SMOOTH SPECIMEN
UNIAXIAL LOAD, R = -1
HYDROGEN-CHARGED MATERIAL
;2Hz
;0.2Hz
;0.02Hz
1.03 0.71 (mass.ppm)
0.42
0.91 0.56
UNCHARGED MATERIAL
;5Hz
STRESS AMPLITUDE, σ a (MPa)
800
700
600
500
400
10^3
10^4
10^5
NUMBER OF CYCLES TO FAILURE, Nf

FIG. 16

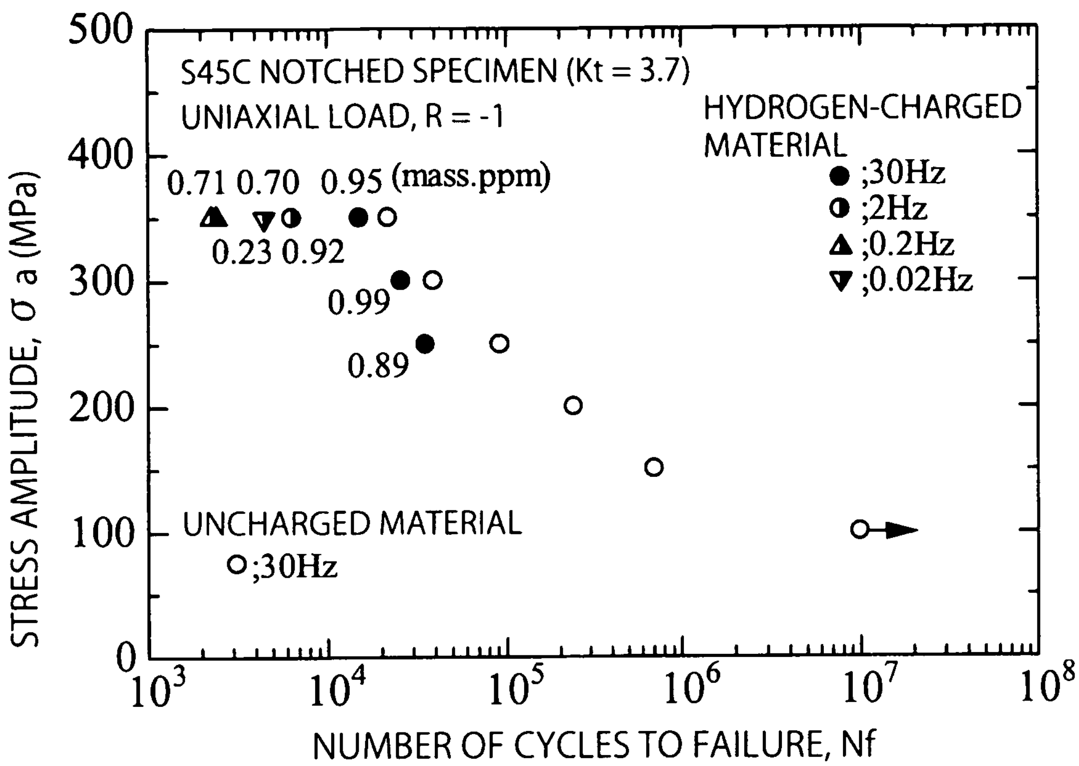
S45C NOTCHED SPECIMEN (Kt = 3.7)
UNIAXIAL LOAD, R = -1
HYDROGEN-CHARGED MATERIAL
;30Hz
;2Hz
;0.2Hz
;0.02Hz
0.71 0.70 0.95 (mass.ppm)
0.23 0.92
0.99
0.89
UNCHARGED MATERIAL
;30Hz
STRESS AMPLITUDE, σ a (MPa)
NUMBER OF CYCLES TO FAILURE, Nf
500
400
300
200
100
0
$10^3$
$10^4$
$10^5$
$10^6$
$10^7$
$10^8$

FIG. 17

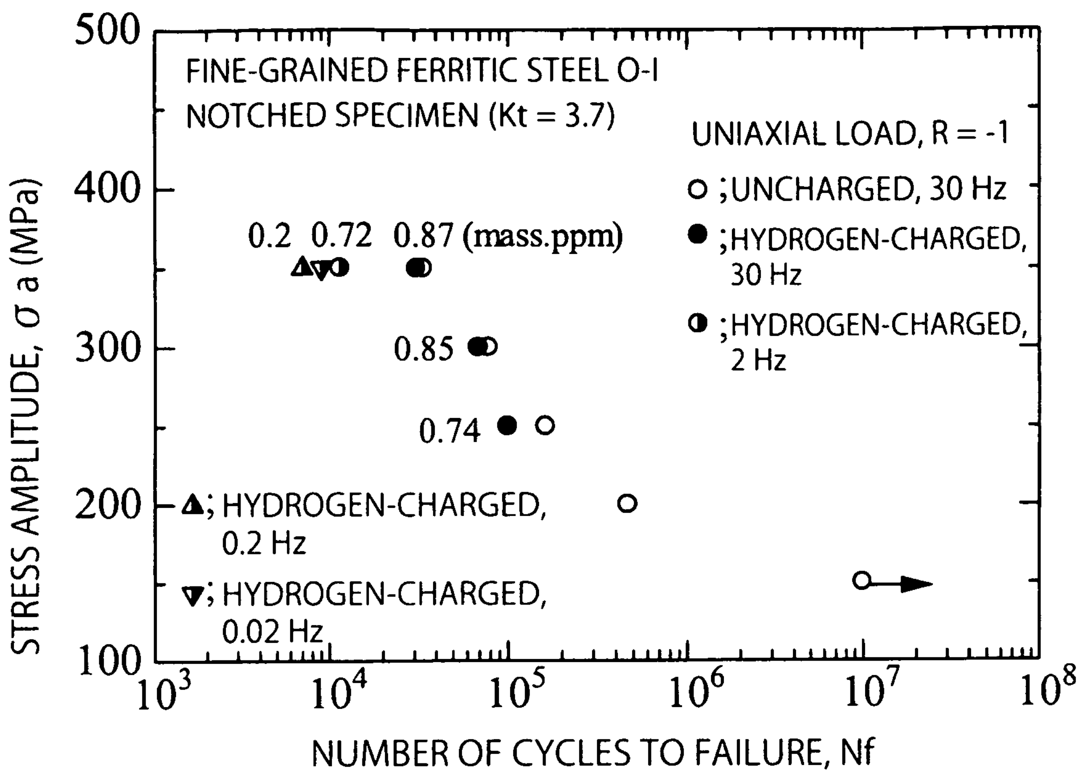
500
400
300
200
100
STRESS AMPLITUDE, σ a (MPa)
FINE-GRAINED FERRITIC STEEL O-I
NOTCHED SPECIMEN (Kt = 3.7)
UNIAXIAL LOAD, R = -1
○ ;UNCHARGED, 30 Hz
● ;HYDROGEN-CHARGED, 30 Hz
◐ ;HYDROGEN-CHARGED, 2 Hz
0.2 0.72 0.87 (mass.ppm)
0.85
0.74
▲; HYDROGEN-CHARGED, 0.2 Hz
▼; HYDROGEN-CHARGED, 0.02 Hz
10^3
10^4
10^5
10^6
10^7
10^8
NUMBER OF CYCLES TO FAILURE, Nf

FIG. 18

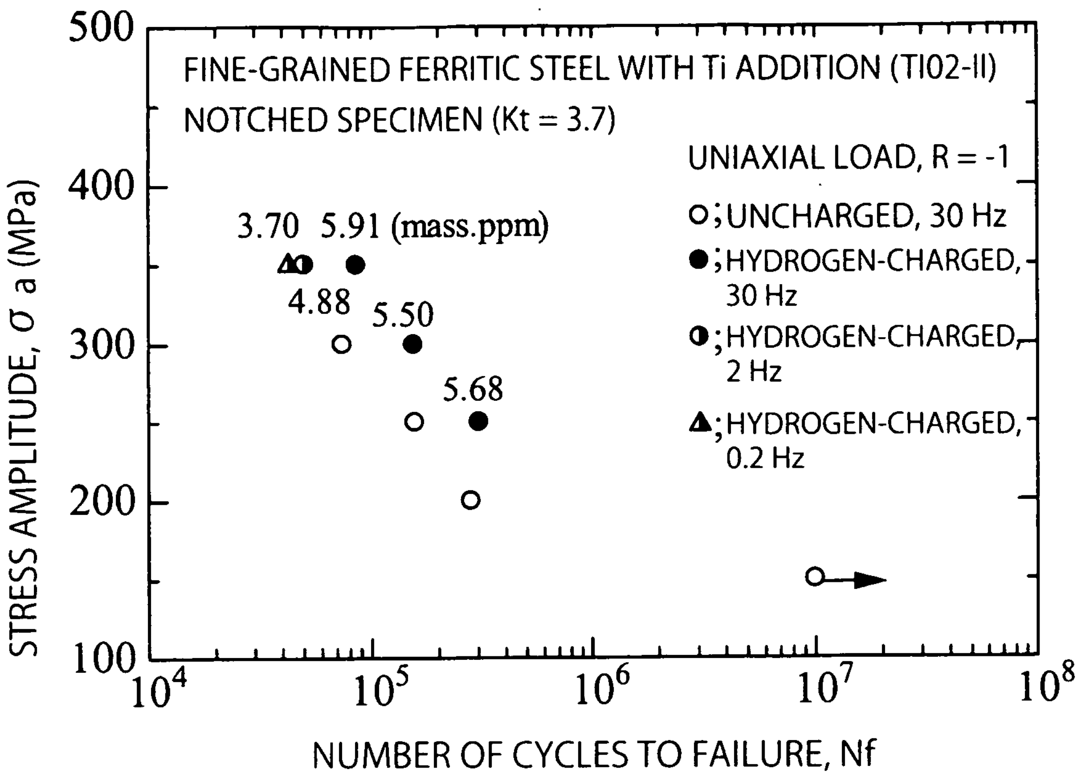
FINE-GRAINED FERRITIC STEEL WITH Ti ADDITION (TI02-II)
NOTCHED SPECIMEN (Kt = 3.7)
UNIAXIAL LOAD, R = -1
○; UNCHARGED, 30 Hz
●; HYDROGEN-CHARGED, 30 Hz
◑; HYDROGEN-CHARGED, 2 Hz
▲; HYDROGEN-CHARGED, 0.2 Hz
3.70
5.91 (mass.ppm)
4.88
5.50
5.68
500
400
300
200
100
STRESS AMPLITUDE, σ a (MPa)
10^4
10^5
10^6
10^7
10^8
NUMBER OF CYCLES TO FAILURE, Nf

FIG. 19

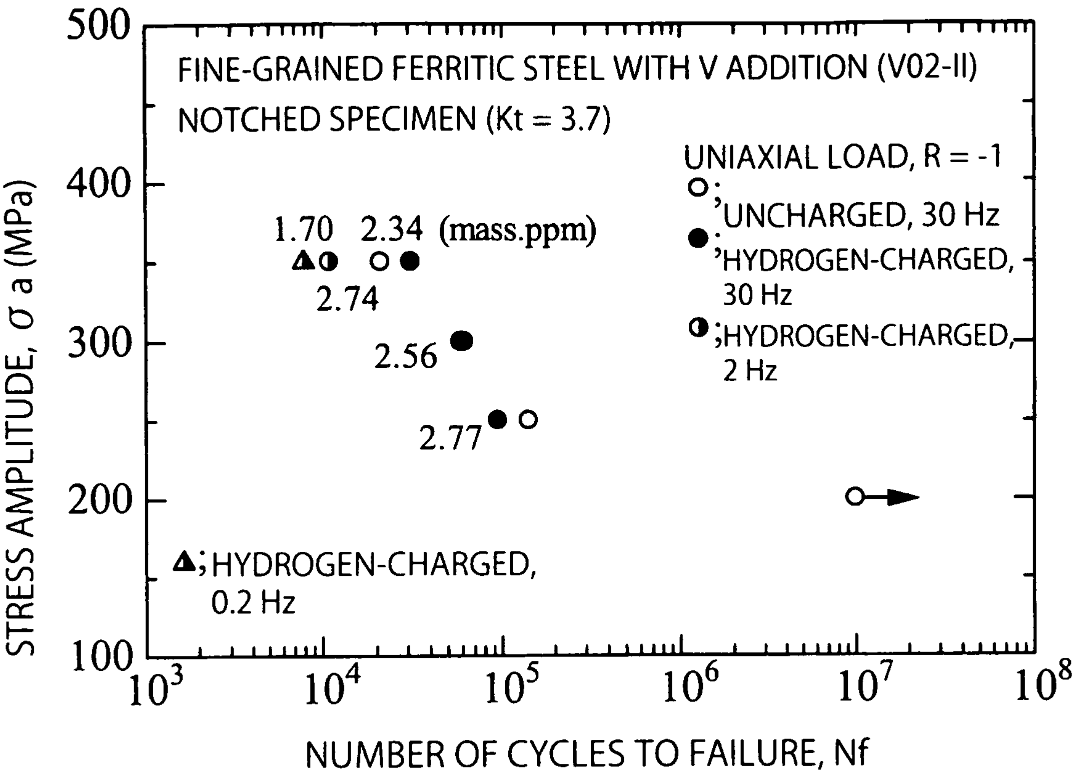

FINE-GRAINED FERRITIC STEEL WITH V ADDITION (V02-II)
NOTCHED SPECIMEN (Kt = 3.7)
UNIAXIAL LOAD, R = -1
○; UNCHARGED, 30 Hz
●; HYDROGEN-CHARGED, 30 Hz
◑; HYDROGEN-CHARGED, 2 Hz
▲; HYDROGEN-CHARGED, 0.2 Hz
1.70
2.34
(mass.ppm)
2.74
2.56
2.77
STRESS AMPLITUDE, σ a (MPa)
500
400
300
200
100
$10^3$
$10^4$
$10^5$
$10^6$
$10^7$
$10^8$
NUMBER OF CYCLES TO FAILURE, Nf

FIG. 20

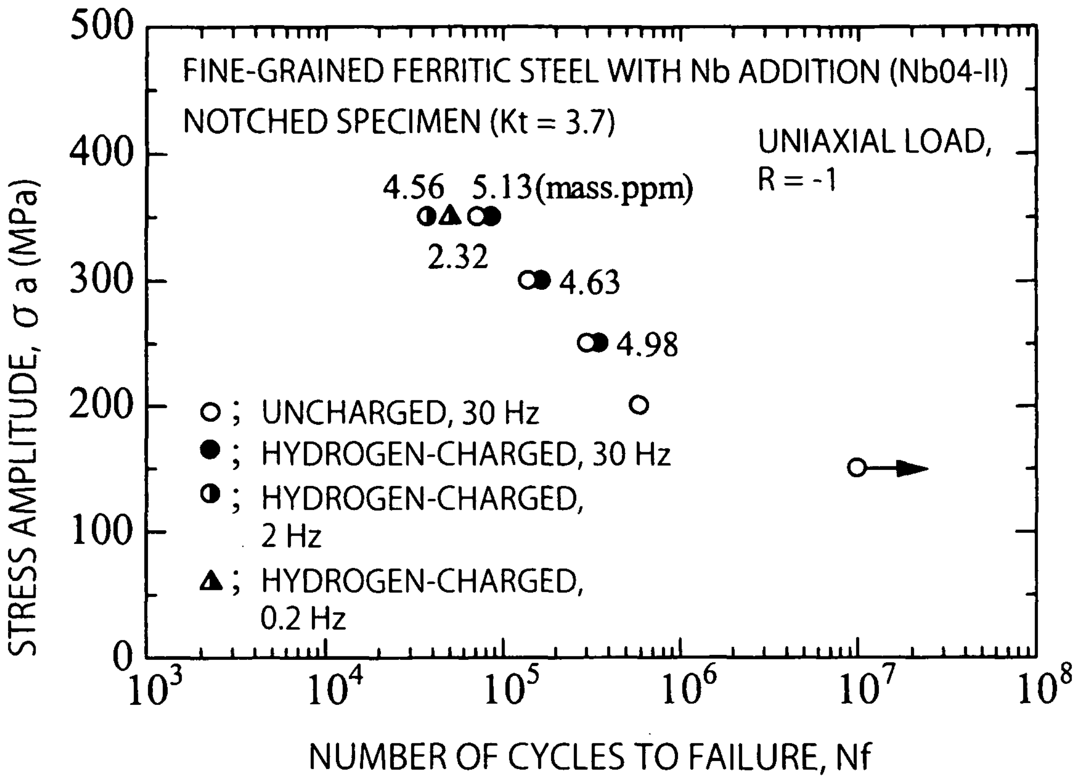
FINE-GRAINED FERRITIC STEEL WITH Nb ADDITION (Nb04-II)
NOTCHED SPECIMEN (Kt = 3.7)
UNIAXIAL LOAD, R = -1
4.56
5.13(mass.ppm)
2.32
4.63
4.98
○ ; UNCHARGED, 30 Hz
● ; HYDROGEN-CHARGED, 30 Hz
◐ ; HYDROGEN-CHARGED, 2 Hz
▲ ; HYDROGEN-CHARGED, 0.2 Hz
STRESS AMPLITUDE, σ a (MPa)
0
100
200
300
400
500
10^3
10^4
10^5
10^6
10^7
10^8
NUMBER OF CYCLES TO FAILURE, Nf

FIG. 21

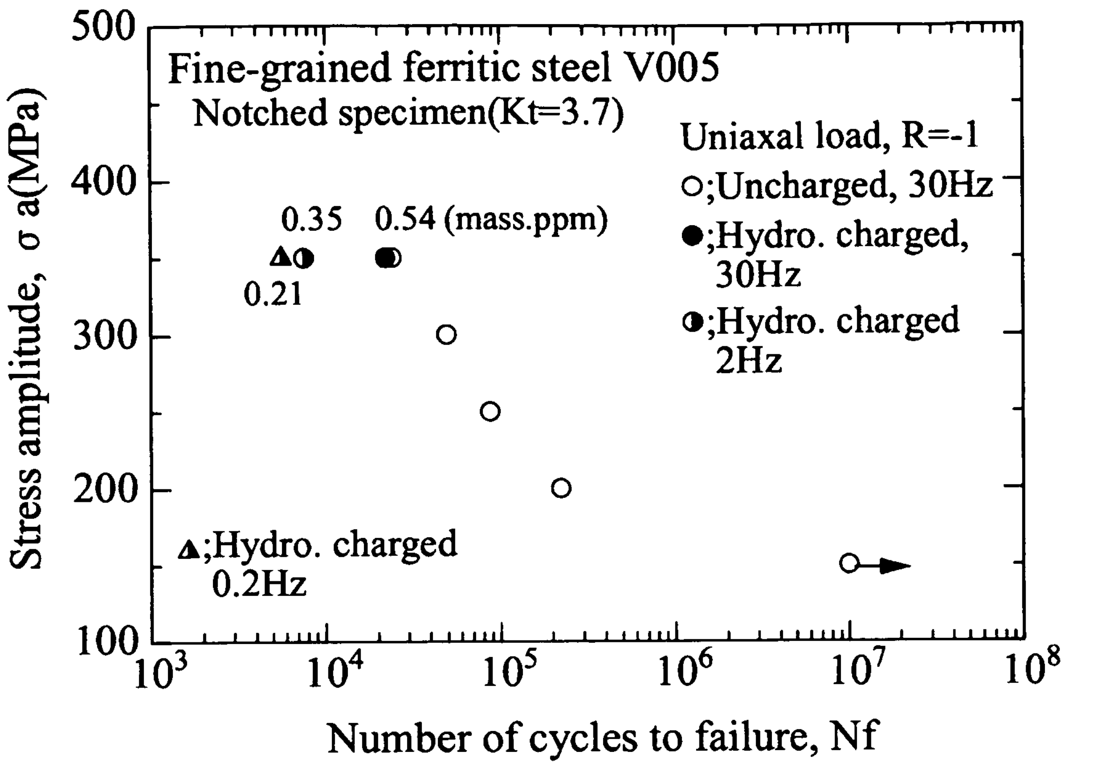
Fine-grained ferritic steel V005
Notched specimen(Kt=3.7)
Uniaxal load, R=-1
○;Uncharged, 30Hz
●;Hydro. charged, 30Hz
◑;Hydro. charged 2Hz
▲;Hydro. charged 0.2Hz
0.35
0.54 (mass.ppm)
0.21
Stress amplitude, σ a(MPa)
500
400
300
200
100
$10^3$
$10^4$
$10^5$
$10^6$
$10^7$
$10^8$
Number of cycles to failure, Nf

FIG. 22

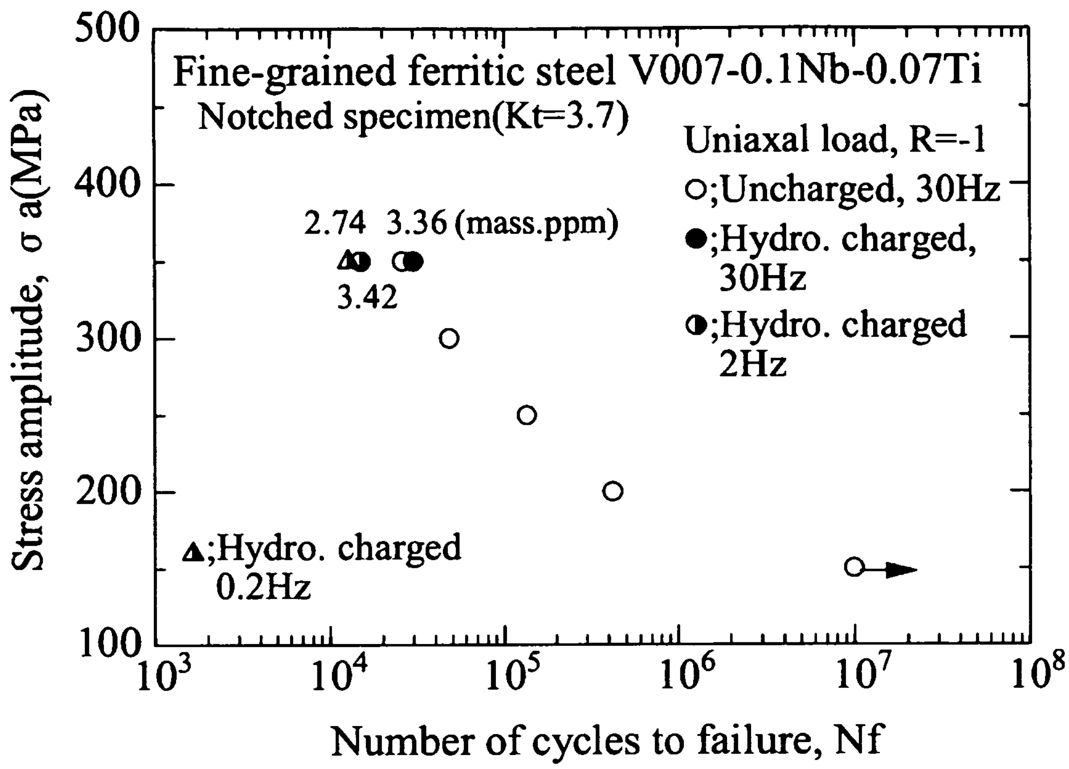
Fine-grained ferritic steel V007-0.1Nb-0.07Ti
Notched specimen(Kt=3.7)
Uniaxal load, R=-1
○;Uncharged, 30Hz
●;Hydro. charged, 30Hz
◑;Hydro. charged 2Hz
▲;Hydro. charged 0.2Hz
2.74 3.36 (mass.ppm)
3.42
500
400
300
200
100
Stress amplitude, σ a(MPa)
10^3
10^4
10^5
10^6
10^7
10^8
Number of cycles to failure, Nf

FIG. 23

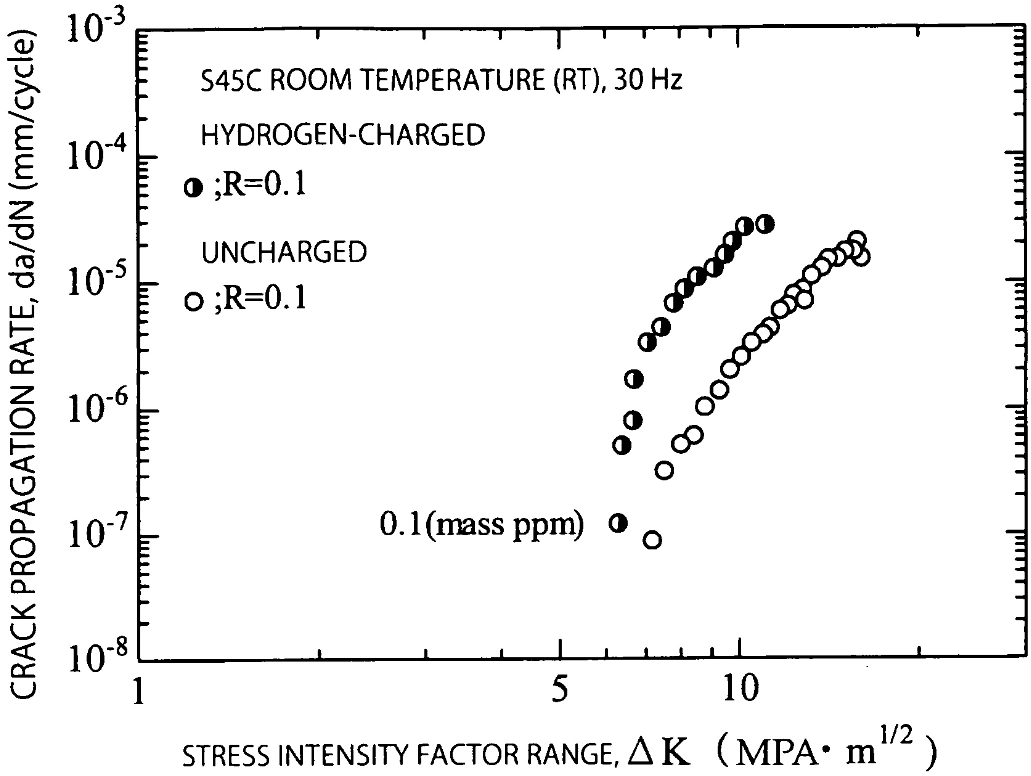
S45C ROOM TEMPERATURE (RT), 30 Hz
HYDROGEN-CHARGED
;R=0.1
UNCHARGED
;R=0.1
0.1(mass ppm)
CRACK PROPAGATION RATE, da/dN (mm/cycle)
10-3
10-4
10-5
10-6
10-7
10-8
1
5
10
STRESS INTENSITY FACTOR RANGE, ΔK (MPA· m1/2)

FIG. 24

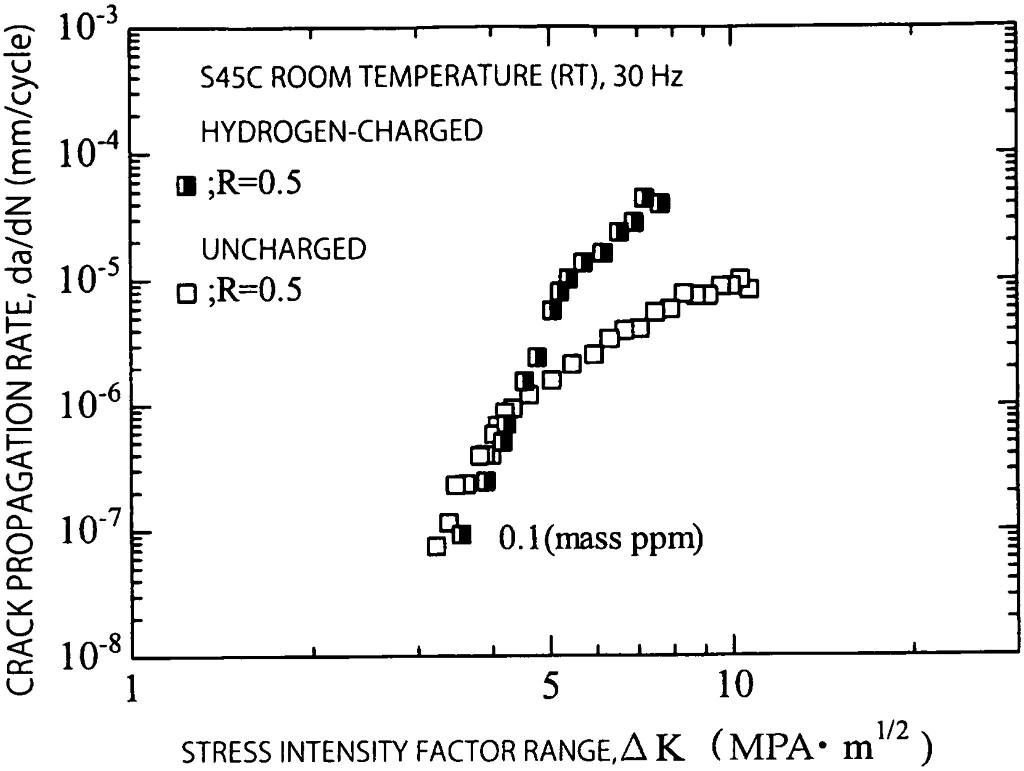

S45C ROOM TEMPERATURE (RT), 30 Hz
HYDROGEN-CHARGED
;R=0.5
UNCHARGED
;R=0.5
0.1(mass ppm)
CRACK PROPAGATION RATE, da/dN (mm/cycle)
10^-3
10^-4
10^-5
10^-6
10^-7
10^-8
1
5
10
STRESS INTENSITY FACTOR RANGE, ΔK (MPA· m^1/2)

FIG. 25

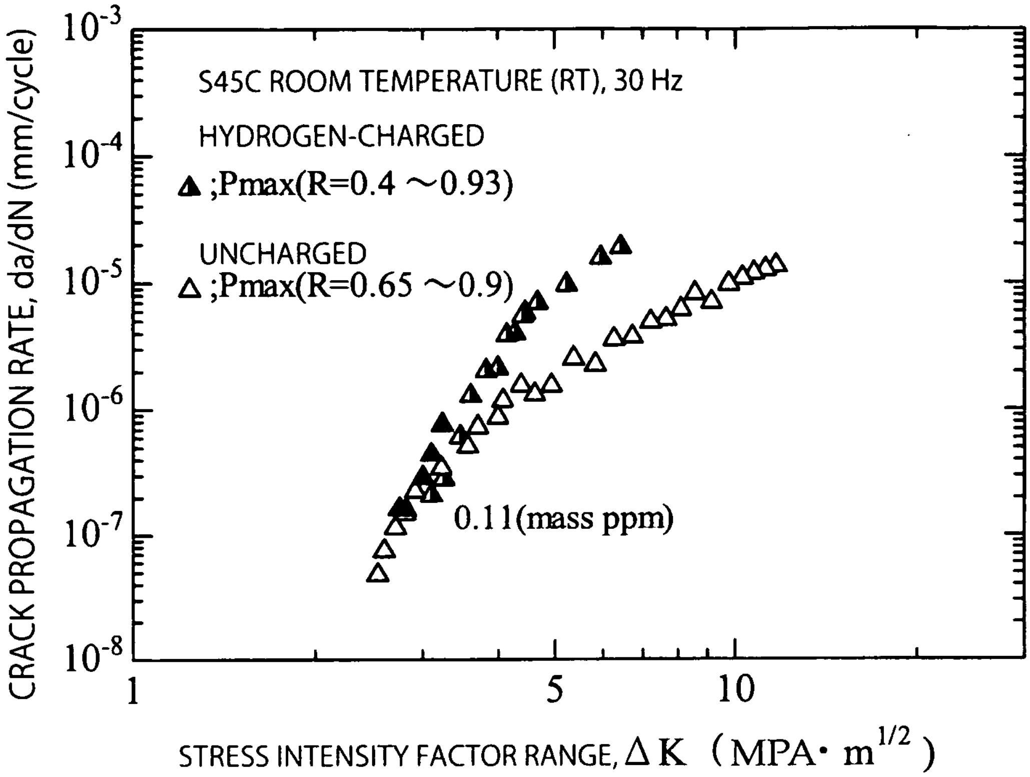
S45C ROOM TEMPERATURE (RT), 30 Hz
HYDROGEN-CHARGED
▲ ;Pmax(R=0.4 ~0.93)
UNCHARGED
△ ;Pmax(R=0.65 ~0.9)
0.11(mass ppm)
CRACK PROPAGATION RATE, da/dN (mm/cycle)
10-3
10-4
10-5
10-6
10-7
10-8
1
5
10
STRESS INTENSITY FACTOR RANGE, ΔK (MPA· m1/2)

FIG. 26

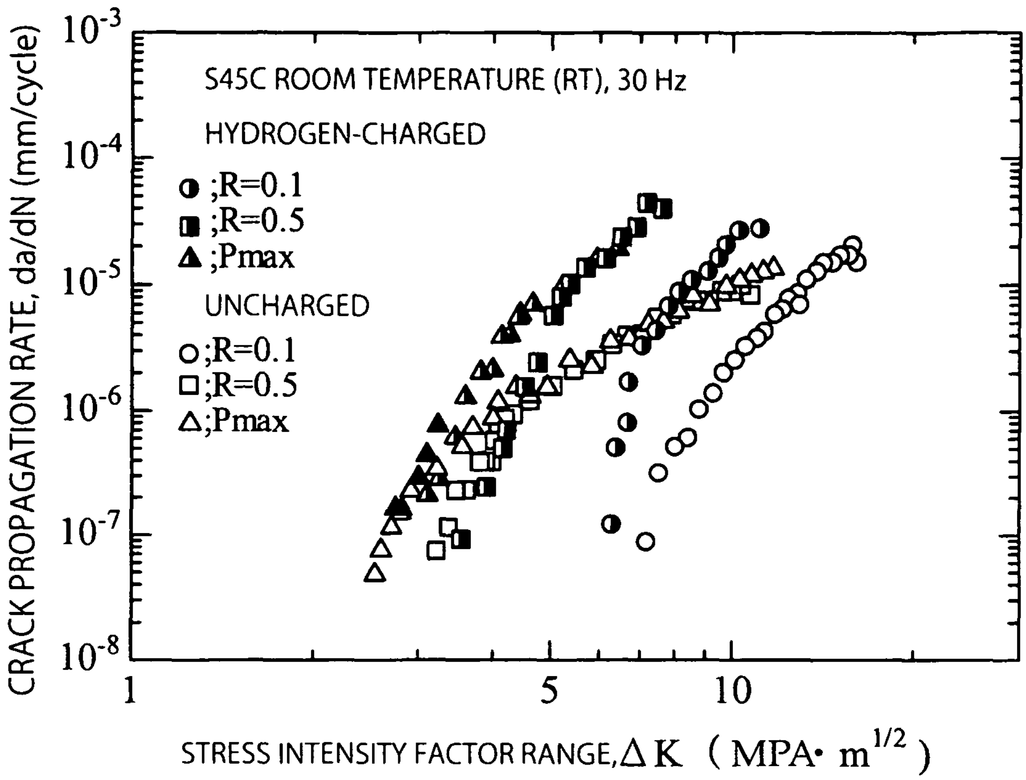
CRACK PROPAGATION RATE, da/dN (mm/cycle)
$10^{-3}$
$10^{-4}$
$10^{-5}$
$10^{-6}$
$10^{-7}$
$10^{-8}$
S45C ROOM TEMPERATURE (RT), 30 Hz
HYDROGEN-CHARGED
;R=0.1
;R=0.5
;Pmax
UNCHARGED
;R=0.1
;R=0.5
;Pmax
1
5
10
STRESS INTENSITY FACTOR RANGE,ΔK (MPA· $m^{1/2}$)

FIG. 27

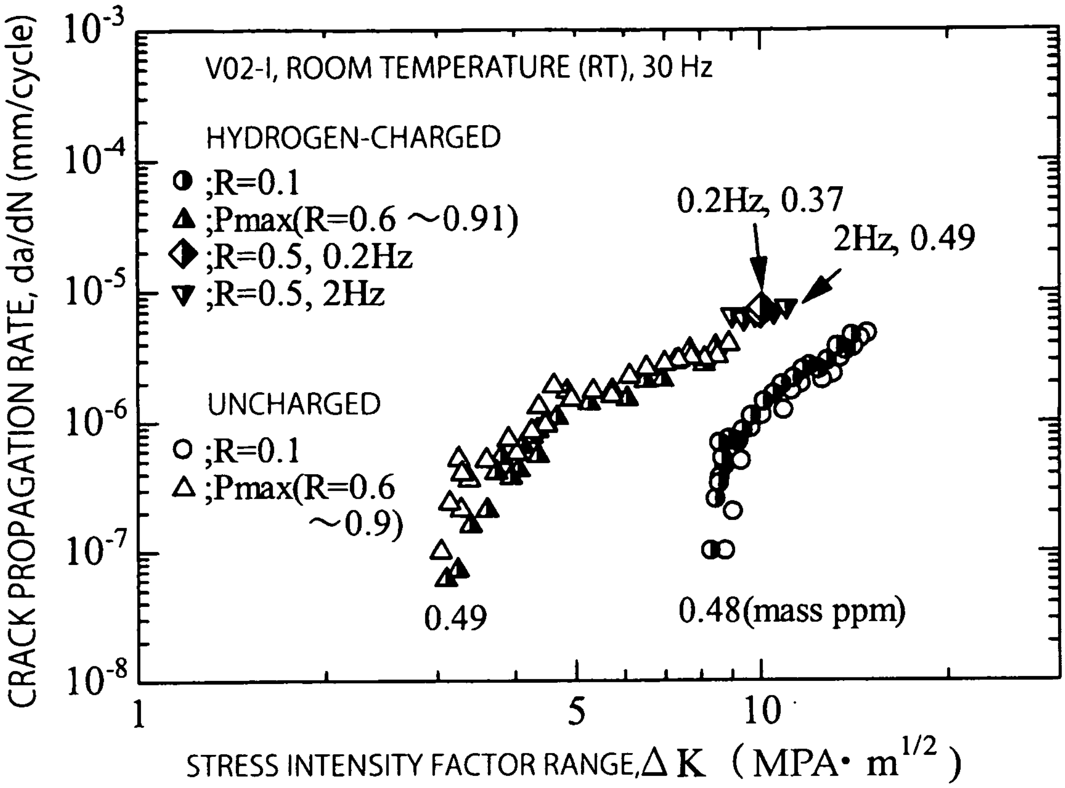
CRACK PROPAGATION RATE, da/dN (mm/cycle)
10-3
10-4
10-5
10-6
10-7
10-8
V02-I, ROOM TEMPERATURE (RT), 30 Hz
HYDROGEN-CHARGED
;R=0.1
;Pmax(R=0.6 ~0.91)
;R=0.5, 0.2Hz
;R=0.5, 2Hz
UNCHARGED
;R=0.1
;Pmax(R=0.6 ~0.9)
0.2Hz, 0.37
2Hz, 0.49
0.49
0.48(mass ppm)
1
5
10
STRESS INTENSITY FACTOR RANGE,ΔK (MPA· m1/2)

FIG. 28

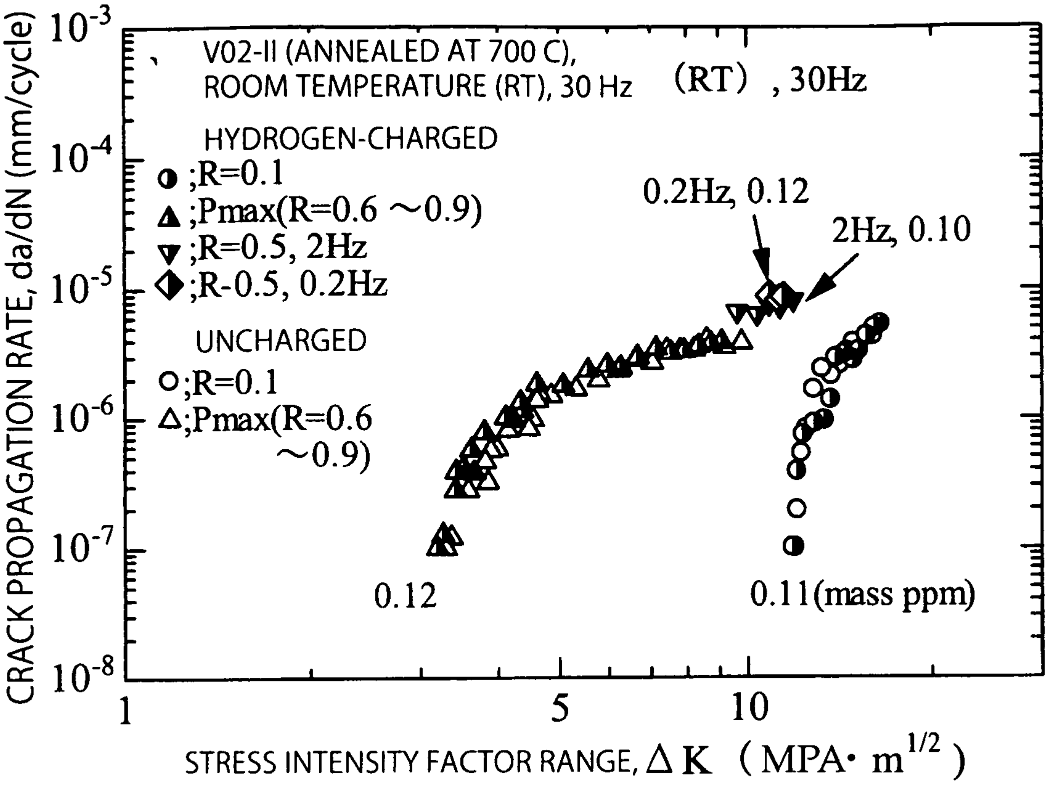
V02-II (ANNEALED AT 700 C),
ROOM TEMPERATURE (RT), 30 Hz (RT) , 30Hz
HYDROGEN-CHARGED
;R=0.1
;Pmax(R=0.6 ~0.9)
;R=0.5, 2Hz
;R-0.5, 0.2Hz
UNCHARGED
;R=0.1
;Pmax(R=0.6 ~0.9)
0.2Hz, 0.12
2Hz, 0.10
0.12
0.11(mass ppm)
CRACK PROPAGATION RATE, da/dN (mm/cycle)
10-3
10-4
10-5
10-6
10-7
10-8
1
5
10
STRESS INTENSITY FACTOR RANGE, ΔK (MPA· m1/2)

FIG. 29

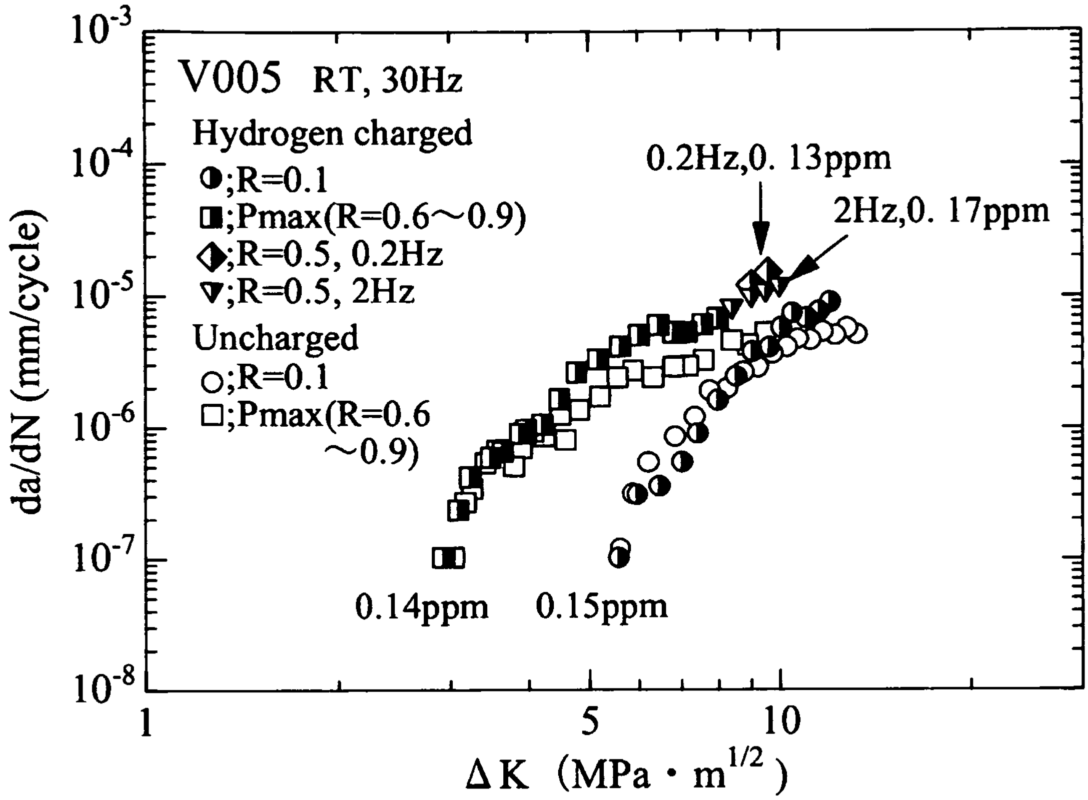
V005 RT, 30Hz
Hydrogen charged
;R=0.1
;Pmax(R=0.6~0.9)
;R=0.5, 0.2Hz
;R=0.5, 2Hz
Uncharged
;R=0.1
;Pmax(R=0.6 ~0.9)
0.2Hz,0. 13ppm
2Hz,0. 17ppm
0.14ppm
0.15ppm
da/dN (mm/cycle)
10^-3
10^-4
10^-5
10^-6
10^-7
10^-8
1
5
10
ΔK (MPa · m^1/2)

FIG. 30

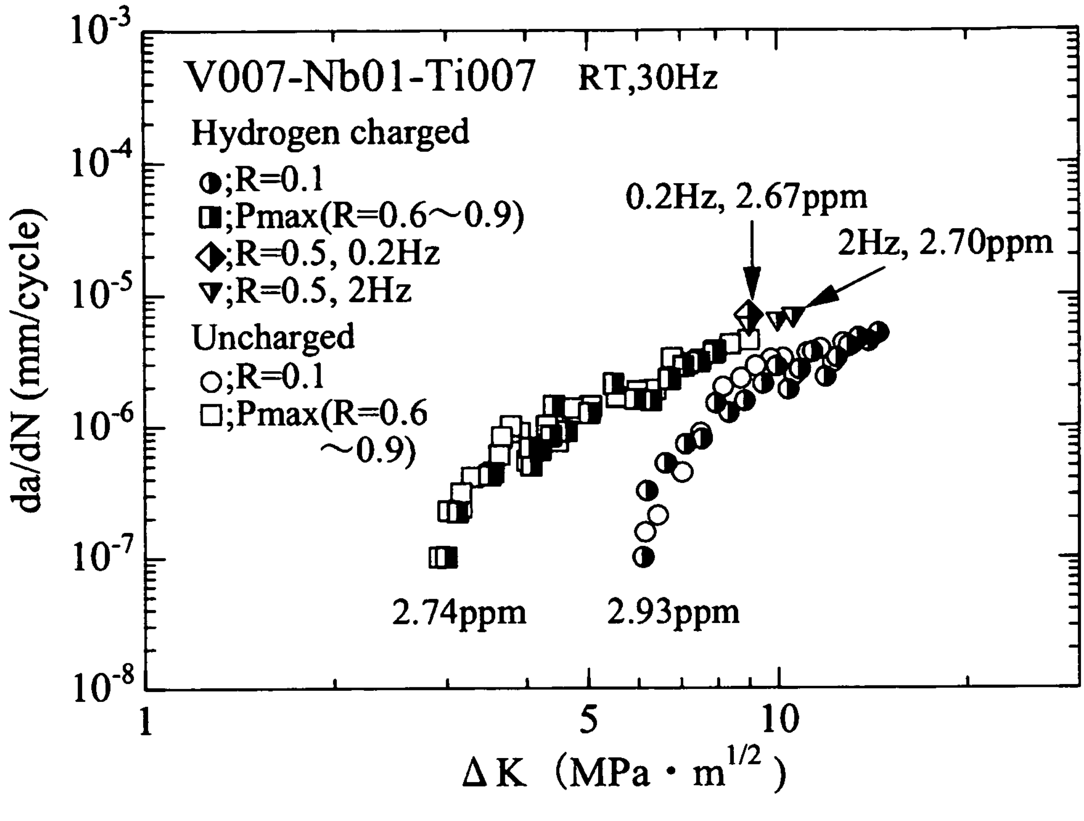
V007-Nb01-Ti007 RT,30Hz
Hydrogen charged
;R=0.1
;Pmax(R=0.6~0.9)
;R=0.5, 0.2Hz
;R=0.5, 2Hz
Uncharged
;R=0.1
;Pmax(R=0.6 ~0.9)
0.2Hz, 2.67ppm
2Hz, 2.70ppm
2.74ppm
2.93ppm
da/dN (mm/cycle)
10-3
10-4
10-5
10-6
10-7
10-8
1
5
10
ΔK (MPa・m1/2)

FIG. 31

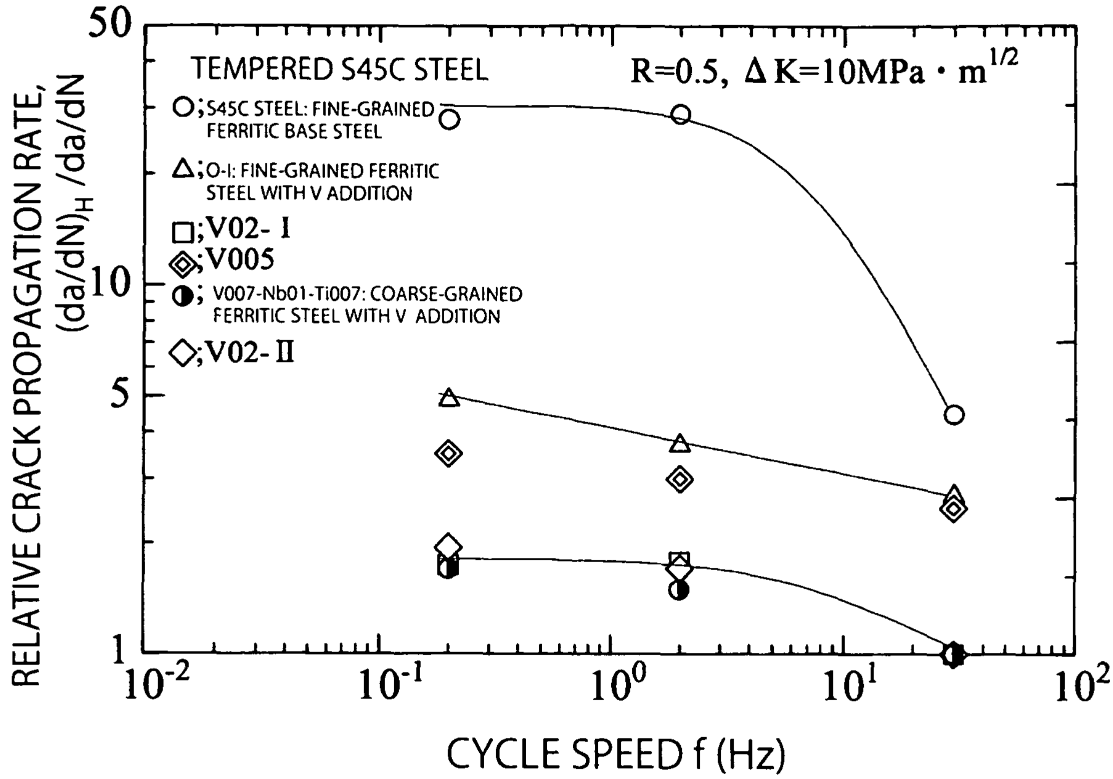
TEMPERED S45C STEEL
R=0.5, ΔK=10MPa・m^1/2
○; S45C STEEL: FINE-GRAINED FERRITIC BASE STEEL
△; O-I: FINE-GRAINED FERRITIC STEEL WITH V ADDITION
□; V02- I
◈; V005
◐; V007-Nb01-Ti007: COARSE-GRAINED FERRITIC STEEL WITH V ADDITION
◇; V02- II
RELATIVE CRACK PROPAGATION RATE, (da/dN)H /da/dN
50
10
5
1
10-2
10-1
100
101
102
CYCLE SPEED f (Hz)

FIG. 32

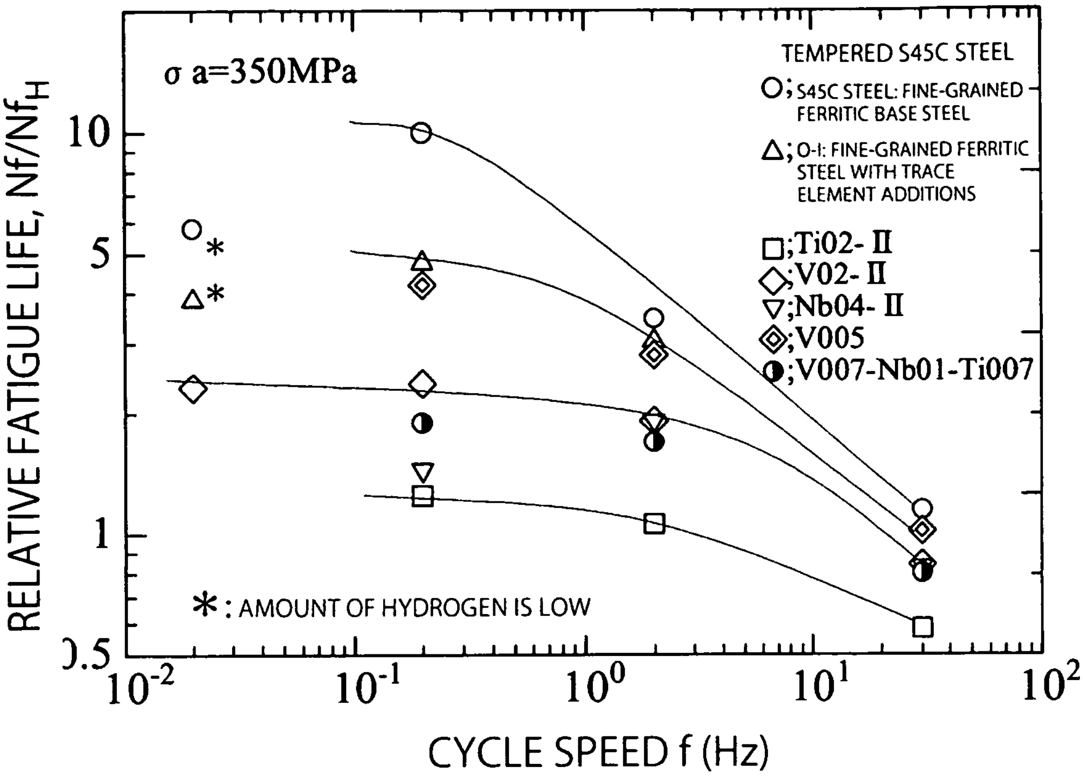
σ a=350MPa
TEMPERED S45C STEEL
○; S45C STEEL: FINE-GRAINED FERRITIC BASE STEEL
△; O-I: FINE-GRAINED FERRITIC STEEL WITH TRACE ELEMENT ADDITIONS
□;Ti02- II
◇;V02- II
▽;Nb04- II
◈;V005
◐;V007-Nb01-Ti007
*: AMOUNT OF HYDROGEN IS LOW
RELATIVE FATIGUE LIFE, Nf/Nf_H
10
5
1
0.5
10^-2
10^-1
10^0
10^1
10^2
CYCLE SPEED f (Hz)

**INTERNATIONAL SEARCH REPORT**

International application No.
PCT/JP2010/051245

A. CLASSIFICATION OF SUBJECT MATTER
*C22C38/00*(2006.01)i, *C21D8/00*(2006.01)i, *C22C38/14*(2006.01)i, *H01M8/02* (2006.01)n

According to International Patent Classification (IPC) or to both national classification and IPC

B. FIELDS SEARCHED

Minimum documentation searched (classification system followed by classification symbols)
C22C38/00, C21D8/00, C22C38/14, H01M8/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-285437 A (Independent Administrative Institution National Institute for Materials Science), 14 October 2004 (14.10.2004), claims; examples (Family: none) | 1-6,10-12<br>7-9,13-15 |
| X | JP 2007-16296 A (Nippon Steel Corp.), 25 January 2007 (25.01.2007), claims; paragraphs [0047], [0048], [0050]; examples; table 1 (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 April, 2010 (14.04.10) | 27 April, 2010 (27.04.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/051245

C (Continuation). DOCUMENTS CONSIDERED TO BE RELEVANT

| Category* | Citation of document, with indication, where appropriate, of the relevant passages | Relevant to claim No. |
|---|---|---|
| X | JP 63-38519 A (Sumitomo Metal Industries, Ltd.), 19 February 1988 (19.02.1988), claims; page 4, lower left column, lines 4 to 11; examples (Family: none) | 1-15 |
| A | JP 2001-73034 A (Director General of National Research Institute for Science and Technology Agency), 21 March 2001 (21.03.2001), (Family: none) | 1-15 |
| A | JP 2005-194547 A (Independent Administrative Institution National Institute for Materials Science), 21 July 2005 (21.07.2005), (Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1038486 B
- JP 2007298131 A